# EUROPEAN PATENT APPLICATION

(11) **EP 2 180 700 A1**
(43) Date of publication of application: **28.04.2010**
(21) Application number: 08792178.9
(22) Date of filing: 04.08.2008
(51) Int. Cl.: H04N 5/93, G06F 3/048, G11B 20/10, G11B 27/00, G11B 27/034, G11B 27/10, G11B 27/34, H04N 5/91

(54) **INTERFACE SYSTEM FOR EDITING VIDEO DATA**

(30) Priority: 03.08.2007 JP 2007203367
(71) Applicant: Loilo Inc, Fujisawa-shi Kanagawa 252-0816 (JP)
(72) Inventor: SUGIYAMA, Koji, Fujisawa-shi Kanagawa 252-0816 (JP); SUGIYAMA, Ryutaro, Fujisawa-shi Kanagawa 252-0816 (JP)
(74) Representative: HOFFMANN EITLE
(86) International application number: PCT/JP2008/063981
(87) International publication number: WO 2009/020103

(57) **Abstract**

Provided is a user interface system which can facilitate dynamic data check and selection upon video data edition and can effectively perform video data edition. It is possible to execute a dynamic image reproduction in a thumbnail icon region by mouseovering thumbnail icons displayed on a display and symbolizing the dynamic image data. By performing double/single click, it is possible to perform zoom in and zoom out. Thus, it is possible to perform various displays when discarding and selecting dynamic image data, thereby facilitating the video data edition.

## Description

### Technical Field

The present invention relates to a user interface of video data editing software used for editing video data such as a dynamic image and an image.

### Background Art

In general, dynamic image editing software used on a personal computer performs tasks of reading dynamic image data files stored on a medium such as a hard disk, deleting an unnecessary portion, adding an image effect such as an effect, deciding a playback order of dynamic image data items on a timeline, and publishing a new dynamic image file therefrom.

That is, a task of editing video data involves handling a large number of dynamic image data files, which requires a task of selecting those dynamic image data items on a screen.

In this case, there is a problem that the contents of the individual dynamic image data files are hard to grasp by an application such as Explorer (registered trademark) for presenting a list of file names only.

In this respect, it is also possible to generate thumbnail images from the individual dynamic image data files and display the thumbnail images on the screen as icons in a selectable state, but the thumbnail images are also still images per se, which does not meet a user's (operator's) purpose for selecting a dynamic image data file while imagining how the file appears to him/her in a playback state.
Patent Document 1: JP 2004-133932 A

### Disclosure of the Invention

### Problem to be solved by the Invention

The present invention has a technical object to provide a user interface system that allows video data to be editedefficiently by making it easy to check and select individual dynamic image data items in editing the video data.

### Means for solving the Problem

In order to achieve the above-mentioned object, the present invention employs the following means.

According to a first aspect of the present invention, there is provided an interface system for editing video data by using a computer, which causes the computer to execute the steps of: arranging a plurality of thumbnail icons on a screen by a central processing unit of the computer, each of the plurality of thumbnail icons at least being formed of a still image generated from one dynamic image file; detecting whether or not a cursor position of which a movement on the screen is controlled by an operation of an auxiliary input device falls on any one of the plurality of thumbnail icons; and playing back, when it is detected that the cursor position falls on the any one of the plurality of thumbnail icons, a dynamic image file corresponding to the any one of the plurality of thumbnail icons on the any one of the plurality of thumbnail icons.

According to the above-mentioned configuration, when the mouse cursor is placed over the thumbnail icon arranged on a desktop screen (mouseover state), a dynamic image is played back in the thumbnail, and hence it becomes extremely easy to grasp contents of the dynamic image and to perform selection from among dynamic image data files, with the result that it is possible to increase efficiency of the editing of the video data.

According to a second aspect of the present invention, there is provided an interface system for editing video data by using a computer, further causing the computer to execute the steps of: detecting that the cursor position falls on the any one of the plurality of thumbnail icons and detecting whether or not a click operation is performed on a button or a switch of the auxiliary input device; performing, when the click operation with respect to the cursor position on the any one of the plurality of thumbnail icons is detected, zoom-in display for enlarging a playback region for the dynamic image file on the any one of the plurality of thumbnail icons on the screen; detecting that the cursor position falls on a desktop ground screen in which the plurality of thumbnail icons are not arranged and detecting whether or not the click operation is performed on the button or the switch of the auxiliary input device; and performing, when the click operation with respect to the cursor position on the desktop ground screen is detected a plurality of times within a predetermined time period, zoom-out display for performing display by reducing the plurality of thumbnail icons on the screen.

According to the above-mentioned configuration, if it is hard to perform checking only by the playback of the dynamic image in the thumbnail, for example, if a large number of thumbnail icons of the same kind of dynamic image are arranged, a dynamic image playback region in the thumbnail icon is enlarged (zoomed in) on the screen by placing a cursor over the thumbnail icon in which the dynamic image is being played back and by performing the click operation with a mouse, which makes it easy to grasp the contents of the dynamic image. Further, by moving the cursor to a position on the desktop ground screen and by clicking on the position, it is possible to zoom out the dynamic image playback region so as to be able to display a plurality of thumbnail icons on the above-mentioned screen to recover the original state.

Accordingly, by making it possible to perform zooming in/zooming out by a simple operation in a case where the contents of the dynamic image are hard to grasp only in the region of the thumbnail icon, it is possible to further increase the efficiency of the editing of the video data.

According to a third aspect of the present invention, there is provided an interface system for editing video data by using a computer, which causes the computer to execute the steps of: arranging a plurality of thumbnail icons on a screen by a central processing unit of the computer, each of the plurality of thumbnail icons at least being formed of a still image generated from one dynamic image file; arranging, along with the plurality of thumbnail icons, one or a plurality of magnet icons each of which is to serve as a core or an arbitrary set of thumbnail icons on the screen; detecting that a cursor position of which a movement on the screen is controlled by an auxiliary input device falls on any one of the plurality of thumbnail icons and then detecting that the any one of the plurality of thumbnail icons has become capable of moving on the screen in synchronization with a movement of the cursor by a click operation performed on a button or a switch of the auxiliary input device; urging to move the any one of the plurality of thumbnail icons on the screen in a direction of the one or the plurality of magnet icons and detecting that the click operation performed on the button or the switch of the auxiliary input device has been released; and moving the any one of the plurality of thumbnail icons on the screen so as to be attracted to the one or the plurality of magnet icons by the releasing of the click operation.

Here, the magnet icon is displayed, for example, at the left top of the screen, and by holding a drag of a specific thumbnail icon by a mouse operation, instantaneously moving the thumbnail icon toward the left top of the screen with momentum, and releasing the drag (slashing), the thumbnail icon moves toward the magnet icon as if the thumbnail icon were flying thereto across the screen to be dynamically displayed so as to be attracted thereto. By gathering a plurality of thumbnail icons around the magnet icon by such a drag-and-slash, it becomes easy to organize the dynamic image data files of the same kind or the dynamic image data files linked to one another on a desktop, and hence it becomes easy to perform selection from among dynamic image data files, with the result that it is possible to increase efficiency of the editing of the video data.

According to a fourth aspect of the present invention, there is provided an editing assistance interface system for editing files by using a computer, which edits the files by moving, on a screen, objects symbolizing the files which are arranged on a screen by using the computer, which causes the computer to execute the steps of: specifying a first object to serve as a movement subject at least on the screen according to a specification input from an auxiliary input device by a central processing unit of the computer; recognizing a plurality of second objects to serve as movement destination candidates which exist on the screen; and arranging symbol images, each of which suggests a direction from a position of the first object on the screen to each of the plurality of second objects, in proximity to the first object.

Here, the object (first object) symbolizing the file represents, for example, the thumbnail icon of the dynamic image, and when the thumbnail is dragged by the mouse to be moved in a predetermined direction, a symbol image (for example, heart shape or arrow shape) is proposed in order to allow visual recognition as to which position of the screen the second object is arranged in as the movement destination candidate. A specific example thereof is a case where, when the first object is dragged by the mouse, a heart-shaped symbol image is displayed in proximity to (around) the first object, and the second object exists as an extension in an opened direction of the heart shape. Display of such a symbol image makes it possible to accurately grasp the direction of the movement destination.

Further, according to the fourth aspect, each of the symbol images includes a symbol image that suggests the direction and a distance from the position of the first object on the screen to each of the plurality of second objects. Accordingly, by suggesting not only the direction but also the distance, the symbol image allows the user to grasp how far the object is to be moved toward a target object (second object). A more specific example thereof is a case where, in the above-mentioned example, the symbol images (heart shapes) are arranged around the first object in distances proportional to distances from the second objects.

### Effects of the Invention

According to the present invention, it is possible to edit video data efficiently by making it easy to check and select individual dynamic image data items in editing the video data.

### Brief Description of the Drawings

[FIG. 1] A diagram illustrating a hardware configuration of a computer according to the present invention.
[FIG. 2] A diagram illustrating a display state of thumbnail icons displayed on a display device according to a first embodiment.
[FIG. 3] A diagram illustrating zooming in/zooming out according to the first embodiment.
[FIG. 4] A diagram illustrating a drag-and-slash operation according to the first embodiment.
[FIG. 5] A diagram illustrating a display state of icons for editing during playback of a dynamic image within the thumbnail icon according to the first embodiment.
[FIG. 6] A diagram (1) illustrating an effect mode according to the first embodiment.
[FIG. 7] A diagram illustrating a timeline mode according to the first embodiment.
[FIG. 8] A diagram (2) illustrating the effect mode according to the first embodiment.
[FIG. 9] A diagram describing a playback range display bar according to a second embodiment.

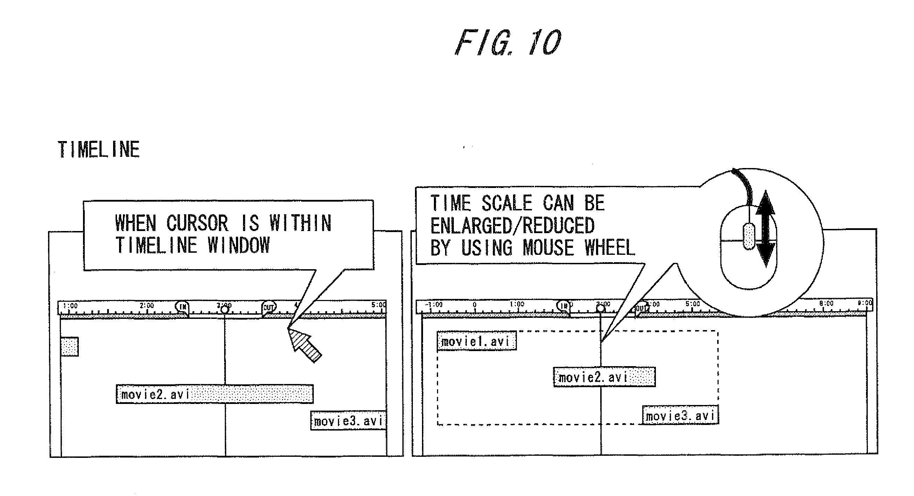

[FIG. 10] An explanatory diagram (1) of a timeline bar according to the second embodiment.
[FIG. 11] An explanatory diagram (2) of the timeline bar according to the second embodiment.
[FIG. 12] An explanatory diagram (3) of the timeline bar according to the second embodiment.
[FIG. 13] An explanatory diagram (4) of the timeline bar according to the second embodiment.
[FIG. 14] An explanatory diagram (5) of the timeline bar according to the second embodiment.
[FIG. 15] An explanatory diagram (6) of the timeline bar according to the second embodiment.
[FIG. 16] An explanatory diagram (7) of the timeline bar according to the second embodiment.
[FIG. 17] An explanatory diagram (8) of the timeline bar according to the second embodiment.
[FIG. 18] An explanatory diagram (9) of the timeline bar according to the second embodiment.
[FIG. 19] An explanatory diagram (10) of the timeline bar according to the second embodiment.
[FIG. 20] An explanatory diagram (11) of the timeline bar according to the second embodiment.
[FIG. 21] An explanatory diagram (1) of a sketch function according to the second embodiment.
[FIG. 22] An explanatory diagram (2) of the sketch function according to the second embodiment.
[FIG. 23] An explanatory diagram of a selection function according to the second embodiment.
[FIG. 24] An explanatory diagram (1) of an effect timeline bar according to the second embodiment.

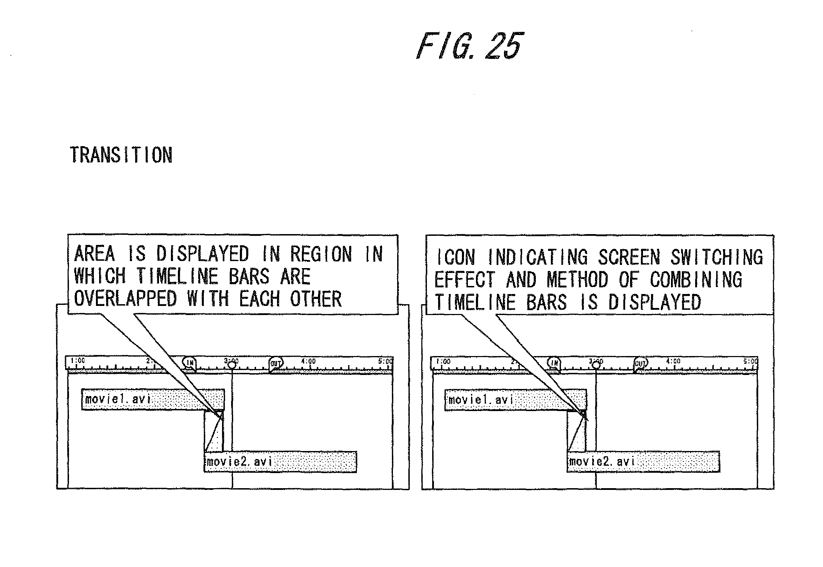

[FIG. 25] An explanatory diagram (2) of the effect timeline bar according to the second embodiment.
[FIG. 26] An explanatory diagram of minimization of the timeline bar according to the second embodiment.
[FIG. 27] An explanatory diagram of a copy function for a timeline window according to the second embodiment.
[FIG. 28] An explanatory diagram (1) of a magnet bar according to the second embodiment.

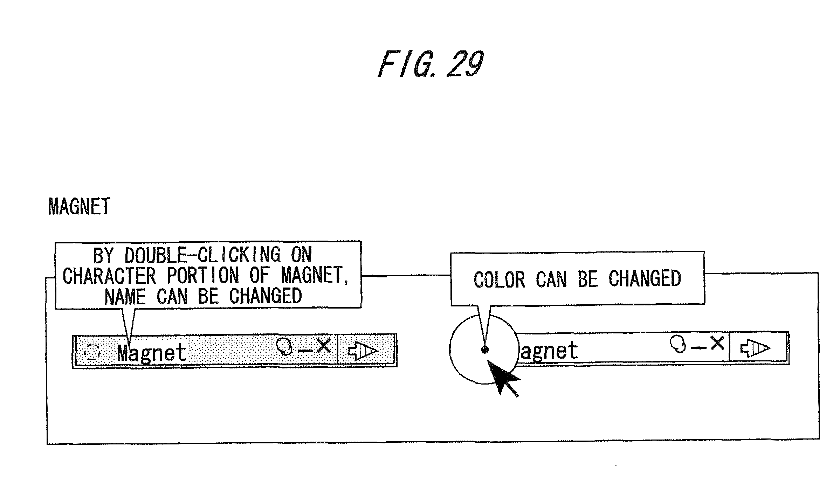

[FIG. 29] An explanatory diagram (2) of the magnet bar according to the second embodiment.
[FIG. 30] An explanatory diagram (3) of the magnet bar according to the second embodiment.
[FIG. 31] An explanatory diagram (4) of the magnet bar according to the second embodiment.
[FIG. 32] An explanatory diagram (5) of the magnet bar according to the second embodiment.
[FIG. 33] An explanatory diagram (6) of the magnet bar according to the second embodiment.
[FIG. 34] An explanatory diagram (7) of the magnet bar according to the second embodiment.
[FIG. 35] An explanatory diagram (8) of the magnet bar according to the second embodiment.
[FIG. 36] An explanatory diagram (9) of the magnet bar according to the second embodiment.
[FIG. 37] An explanatory diagram (10) of the magnet bar according to the second embodiment.
[FIG. 38] An explanatory diagram (11) of the magnet bar according to the second embodiment.

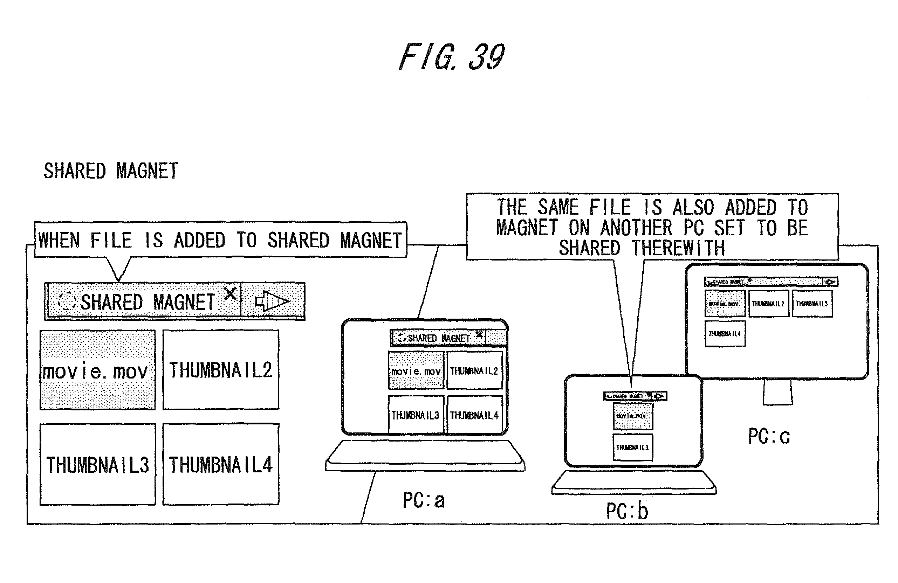

[FIG. 39] An explanatory diagram (12) of the magnet bar according to the second embodiment.

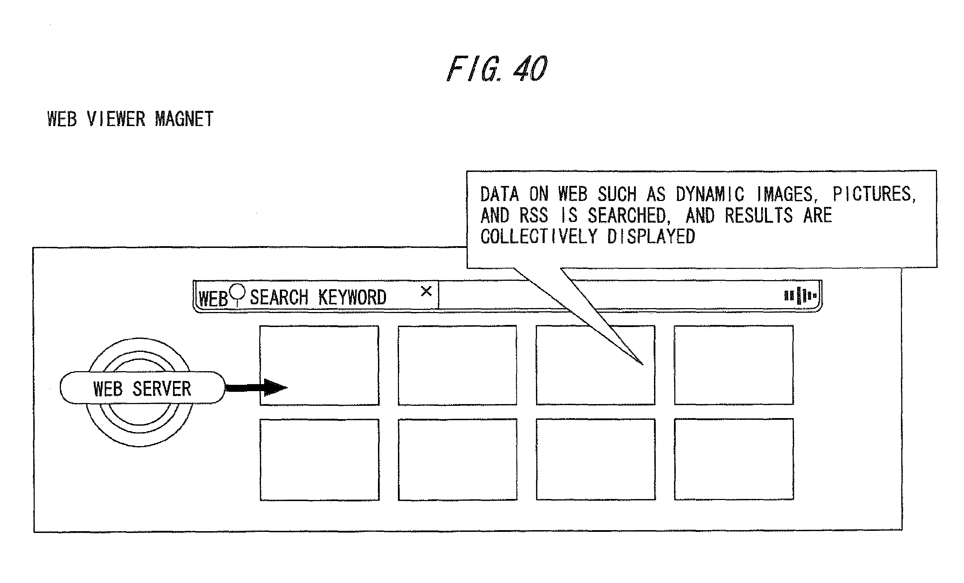

[FIG. 40] An explanatory diagram (13) of the magnet bar according to the second embodiment.

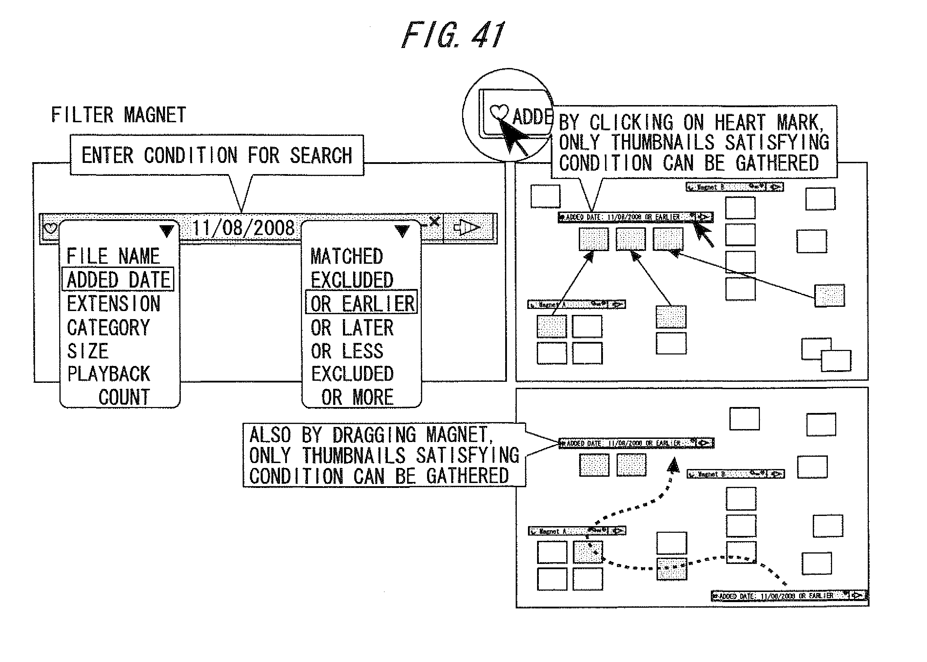

[FIG. 41] An explanatory diagram (14) of the magnet bar according to the second embodiment.

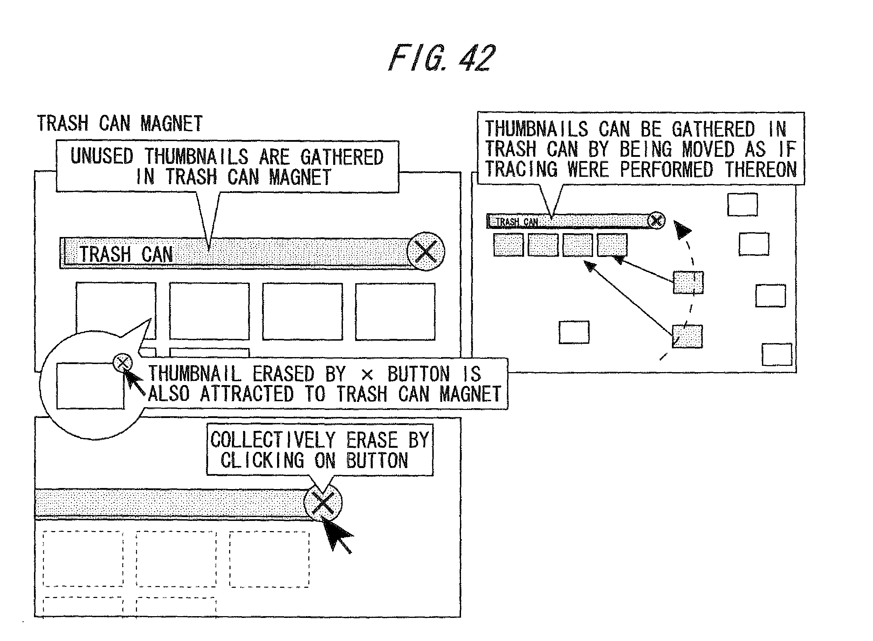

[FIG. 42] An explanatory diagram (15) of the magnet bar according to the second embodiment.

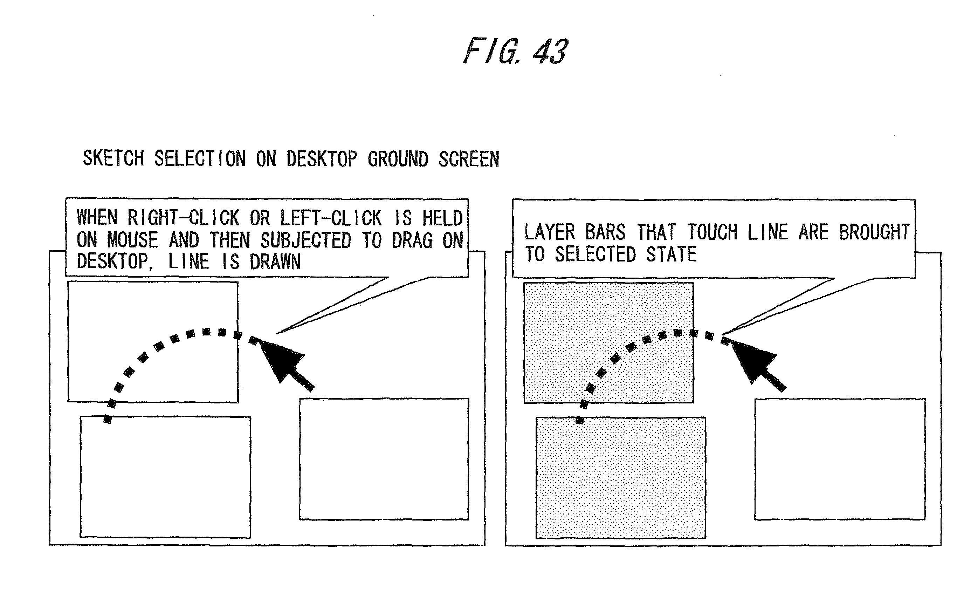

[FIG. 43] An explanatory diagram (1) of a sketch selection function according to the second embodiment.
[FIG. 44] An explanatory diagram (2) of the sketch selection function according to the second embodiment.
[FIG. 45] An explanatory diagram of a handwriting effect function according to the second embodiment.
[FIG. 46] An explanatory diagram (1) of a full-screen display function according to the second embodiment.
[FIG. 47] An explanatory diagram (2) of the full-screen display function according to the second embodiment.
[FIG. 48] An explanatory diagram (1) of a zoom-in function according to the second embodiment.
[FIG. 49] An explanatory diagram (2) of a zoom-out function according to the second embodiment.
[FIG. 50] An explanatory diagram illustrating an attraction action of the thumbnail icon to the magnet bar according to the second embodiment.
[FIG. 51] An explanatory diagram of a copy function of the thumbnail icon according to the second embodiment.
[FIG. 52] An explanatory diagram of the timeline window according to the second embodiment.
[FIG. 53] An explanatory diagram of a thumbnail icon editing mode screen according to the second embodiment.
[FIG. 54] An explanatory diagram (16) of the magnet bar according to the second embodiment.

### Description of Symbols

- CPU: central processing unit
- MM: main memory
- BUS: bus
- HD: hard disk drive
- DISP: display device
- MOU: mouse
- KBD: keyboard

### Best Mode for carrying out the Invention

### <First embodiment>

An embodiment of the present invention is described with reference to the drawings.

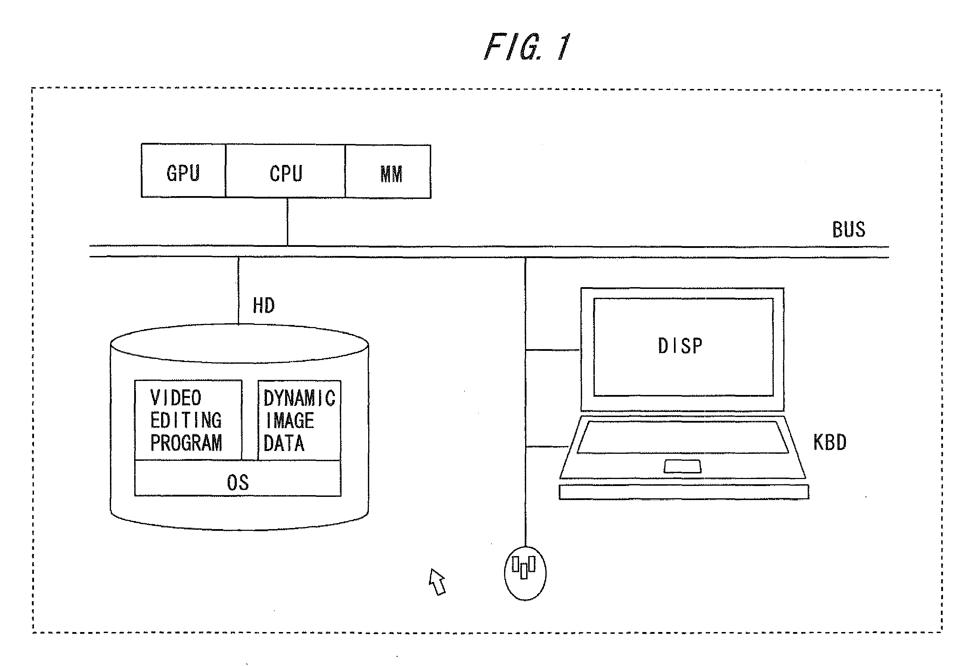

FIG. 1 is a block diagram illustrating a hardware configuration according to this embodiment.

In this embodiment, a user interface is employed as a part of a video data editing program, and the program is installed within a hard disk drive (HD) of a personal computer.

The personal computer includes, as its main components, a central processing unit (CPU), a graphics processing unit (GPU), and a main memory (MM), and also includes the hard disk drive (HD) serving as a large-scale storage device connected thereto by a bus (BUS), a keyboard (KBD) serving as an input device, a mouse (MOU) serving as an auxiliary input device, and a display device (DISP) serving as an output device.

Within the hard disk drive (HD), a video editing program is installed along with an operating system (OS), and functions of the video editing program are realized by the video editing program being sequentially read by the central processing unit (CPU) via the bus (BUS) and the main memory (MM).

Also stored within the hard disk drive (HD) along with the video editing program are a large number of dynamic image data files to which extensions such as MOV, MPG, AVI, and the like are appended.

Note that, although not shown, the personal computer may be connected to a multimedia server accumulating a large number of dynamic image data items via a network. In this case, the above-mentioned dynamic image data files are accumulated on the multimedia server, and the dynamic image data files may be downloaded onto the personal computer via the network and displayed on the display device (DISP) as thumbnail icons.

In addition, the video editing program may be registered in an ASP server connected via the network.

This embodiment is characterized by a technology effective in execution of the video editing program along which the above-mentioned plurality of dynamic image data items are read from the hard disk drive (HD) or the multimedia server, the thumbnail icons are generated, and the thumbnail icons are displayed on a screen of the display device (DISP).

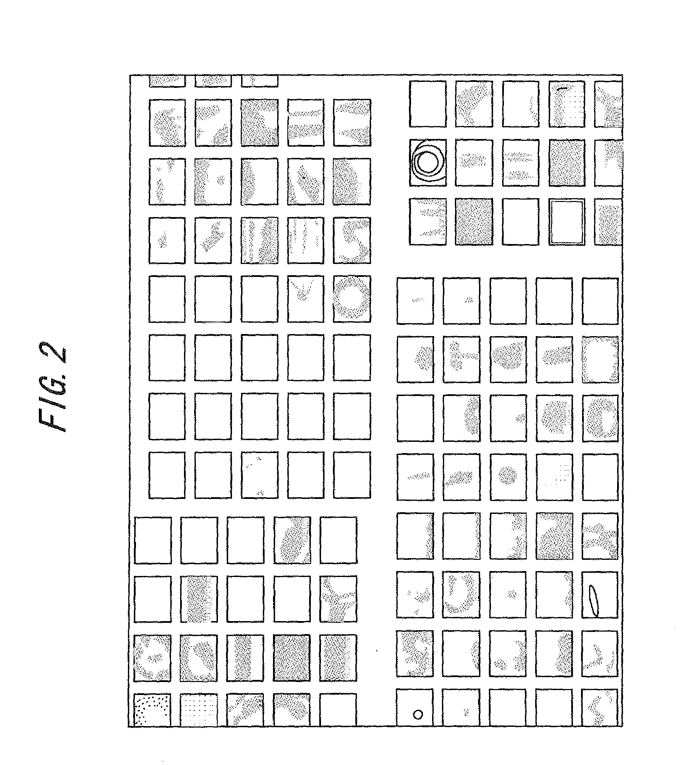

FIG. 2 illustrates the screen displayed on the display device (DISP) according to this embodiment.

When the video editing program within the hard disk drive (HD) is read by the central processing unit (CPU) via the bus (BUS) and the main memory (MM), the video editing program generates the thumbnail icons from the dynamic image data items stored within the hard disk drive (HD), and displays the thumbnail icons in a matrix arrangement.

Further, the dynamic image data items are subjected to an effect processing by the graphics processing unit (GPU) instead of the central processing unit (CPU) and output to the display device (DISP) or the hard disk drive (HD). Accordingly, in this embodiment, the graphics processing unit (GPU) performs the effect processing on the dynamic image data items, which can realize a high speed processing.

In a state in which the thumbnail icons are displayed on the display device (DISP) as illustrated in PIG. 2, a user operates the mouse (MOU) to cause a mouse cursor to be able to move over an arbitrary number of thumbnail icons. At this time, a coordinate position of the mouse cursor is recognized by the central processing unit (CPU), and upon detection of the mouse cursor hovering over a thumbnail icon, the central processing unit (CPU) reads an original dynamic image data file based on an attribute of the thumbnail icon and displays the file by playing back the corresponding dynamic image data item in a region of the thumbnail icon.

By thus mouseovering the thumbnail icon, it is possible to play back the dynamic image data item represented by the thumbnail icon, and by referencing an actual dynamic image, it becomes easy to judge whether or not to employ the dynamic image data item.

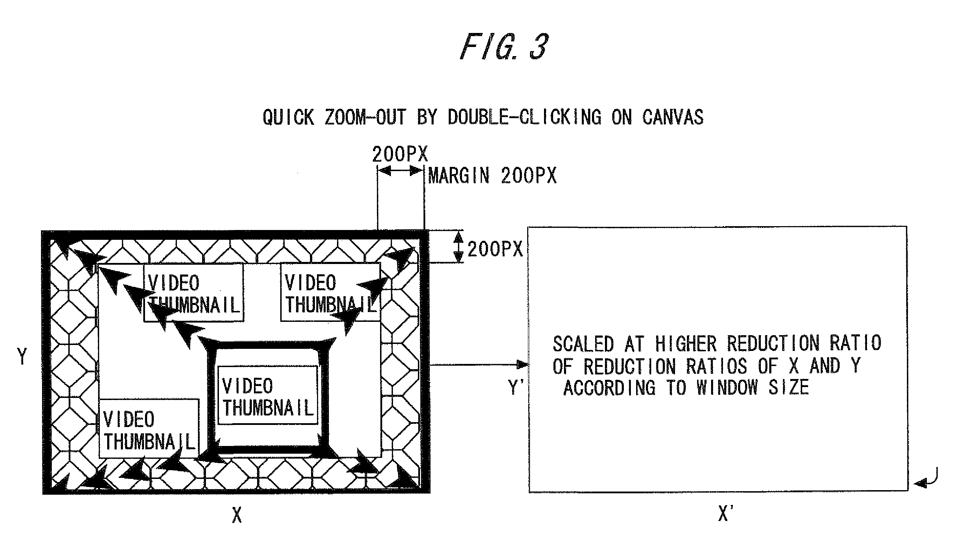

FIG. 3 is a diagram for describing a zoom-in/zoom-out function for the thumbnail icon on a display screen.

Here, the central processing unit (CPU) recognizes which of the thumbnail icons the position of the mouse cursor is on, and when a single-click operation on a left button of the mouse in the above-mentioned position is recognized, a zoom-in action is executed to display the dynamic image played back in the region of the corresponding thumbnail icon on the display screen by gradually enlarging the image.

Accordingly, by using the zoom-in function, it becomes easier to check the contents of the dynamic image that are hard to grasp only by the playback of the dynamic image in the thumbnail icon, which makes it possible to facilitate selection of the dynamic image data.

Further, after it is detected that the position of the mouse cursor is on a desktop ground screen in which the thumbnail icons are not arranged, when a single click action is performed on the mouse (MOU) in this position, in order to cause a larger number of thumbnail icons to be displayed on the display screen again, zoom-out display is performed to recover the state illustrated in FIG. 2.

If it is hard to perform checking only by the playback of the dynamic image in a thumbnail, for example, if a large number of thumbnail icons of the same kind of dynamic image (thumbnail icons of dynamic image data on flickering flames as illustrated in FIG. 2) are arranged, such a zoom-in/zoom-out function makes it possible to enlarge (zoom in) a dynamic image playback region in the thumbnail icon on the screen by moving the mouse cursor over the thumbnail icon in which the dynamic image is being played back and by single-clicking thereon, which makes it easy to grasp the contents of the dynamic image.

Further, by moving the cursor to a position on the desktop ground screen (screen region other than the region in which the thumbnail icons are arranged) and by single-clicking on the position, it is possible to zoom out the dynamic image playback region so as to be able to display a plurality of thumbnail icons on the above-mentioned screen to recover the original state.

Accordingly, by making it possible to perform zooming in/zooming out by a simple operation in a case where the contents of the dynamic image are hard to grasp only in the region of the thumbnail icon, it is possible to further increase efficiency of the editing of the video data.

Note that a zoom-in/zoom-out action is described by the case of being realized by a left button clicking operation on the mouse (MOU), but in a case of a wheel mouse (MOU), the zoom-in/zoom-out action may be controlled by a rotation operation on a scroll wheel.

Further, the zooming in may involve switching to an editing mode. The term "editing mode" means editing including deletion of an unnecessary portion of the dynamic image data and addition of a specific effect. In the editing mode, only a single dynamic image data is handled, and hence if another thumbnail icon is single-clicked on the display screen, the clicked thumbnail icon may be zoomed in to transit to the editing mode for the dynamic image data. By performing such an action, a click operation on the thumbnail icon may cause movement between the dynamic image data items.

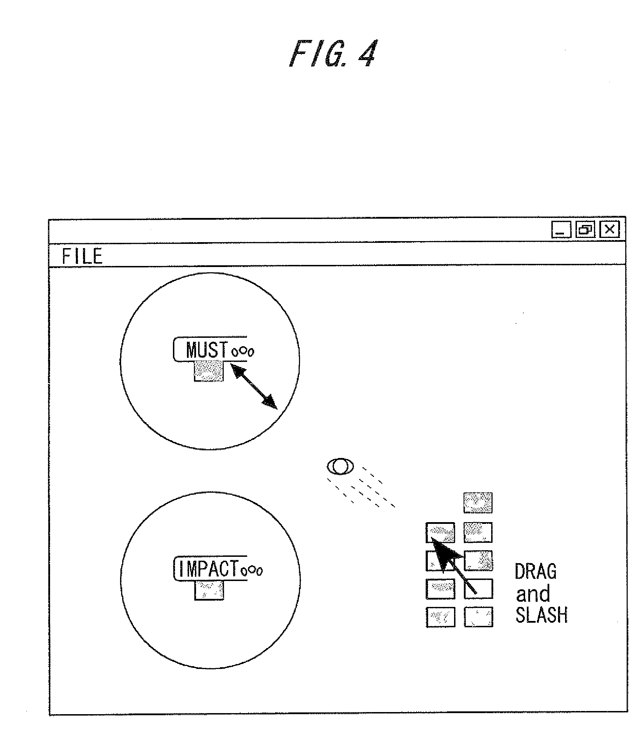

FIG. 4 is a diagram for describing a "drag-and-slash" function that is one of characteristics of this embodiment.

As illustrated in FIG. 4, a plurality of thumbnail icons (hereinafter, referred to as "thumbnail icon group") are arranged at the right of the display screen. In addition, a first magnet icon (displayed as "MUST") is located at the left top, and a second magnet icon (displayed as "IMPACT") is located at the left bottom. Those magnet icons are each used for displaying a word to be an index for sorting specific dynamic image data items. For example, "MUST" symbolizes a set of essential dynamic image data items, and "IMPACT" symbolizes a set of impactful dynamic image data items. An attraction region is provided to a circle surrounding each of the two magnet icons. The function of the attraction region is described later.

Here, the thumbnail icon can be moved to any position on the screen by dragging with a left-click on the mouse (MOU). At this time, the mouse cursor is moved onto any one of the thumbnail icons from the thumbnail icon group and dragged to move the thumbnail icon toward the magnet icon "MUST" with momentum, immediately after which the drag is released (drag-and-slash operation), and hence the thumbnail icon moves toward the magnet icon "MUST" as if the thumbnail icon were flying thereto. At this time, by setting an initial velocity and a resistance parameter of the mouse cursor in a dragged state, the thumbnail icon moves on the display screen while decreasing the velocity gradually. Then, after entering the attraction region of the magnet icon "MUST" described above, the thumbnail icon moves so as to be attracted to the magnet icon "MUST" located at its center, and stops in a position in proximity to the magnet icon "MUST".

Accordingly, by combining a drag-and-slash action on the mouse (MOU) and an attraction function for the magnet icon, arbitrary thumbnail icons can be separated from the thumbnail icon group to previously collect dynamic image data candidates to be employed for the video data editing therefrom.

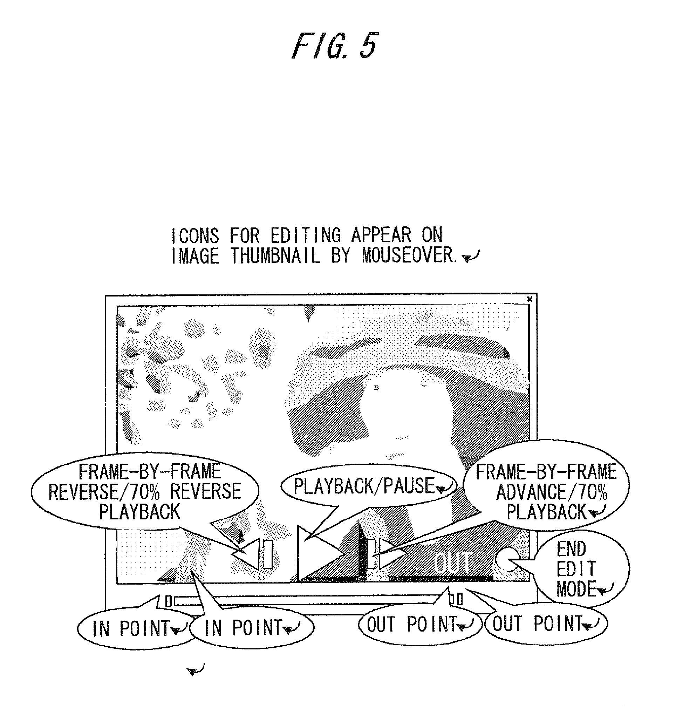

FIG. 5 illustrates a state in which a shift is made to the editing mode by performing a single-click in a mouseover state (state in which the mouse cursor is placed over the thumbnail icon on the screen).

In a dynamic image editing mode illustrated in FIG. 5, a cut editing controller is displayed. The cut editing controller includes an TN point specifying button, a frame-by-frame revere/70% reverse playback button, a playback/pause button, a frame-by-frame advance/70% playback button, an OUT point specifying button, and a copy button, and by clicking on those buttons, it becomes possible to appropriately perform cut editing on the dynamic image data.

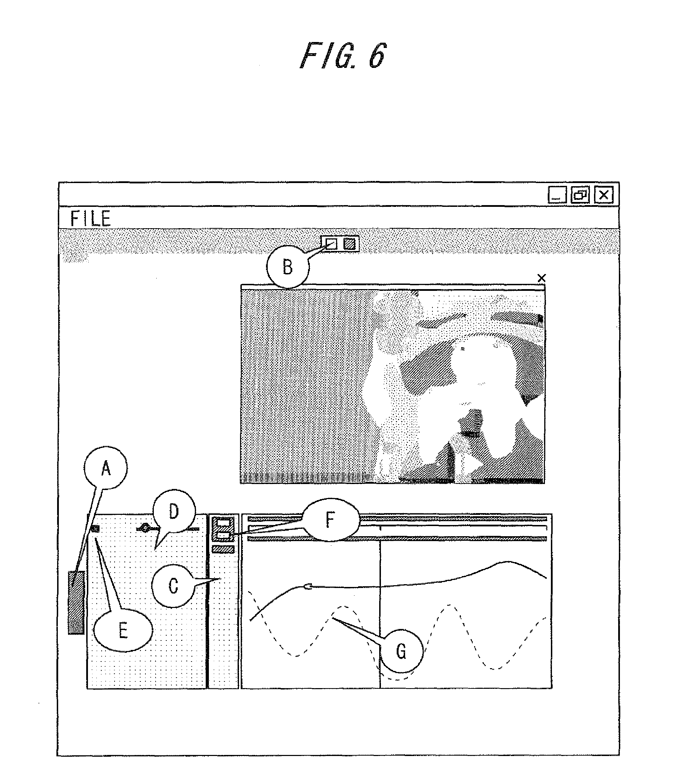

FIG. 6 illustrates a display state of the display screen for describing an effect mode.

In the effect mode, an effect with respect to a single dynamic image data item (single thumbnail icon) and an effect with respect to the plurality of dynamic image data items (plurality of thumbnail icons) have different functions, and are therefore described separately.

### (Case of single dynamic image data item)

In the above-mentioned editing mode, by mouseovering a permanently-provided effect button (B), the effect processing is temporarily added to the thumbnail icon. In this state, the effect button (B) is single-clicked on to thereby transit to the effect mode of adding an effect to the thumbnail. In the effect mode, effect windows (window parts (C) and (D) illustrated on the left of FIG. 6) are opened.

At this time, by depressing a button (A), the effect windows (C) and (D) are switched to a display/non-display state.

In the window (C), an effect to be applied can be displayed. Further, in the window (D), effect properties are displayed. By depressing an effect property check button (E) therein, the effect (for example, animation effect) is selected and displayed as an icon (F).

By operating the icon (F), an animation curve is displayed within a window (G). Here, a key frame is entered by the single-click operation, a Bezier curve is displayed by a right-click.

### (Case of plurality of dynamic image data items)

In the above-mentioned editing mode, by mouseovering the permanently-provided effect button (B), the effect processing is temporarily added to the thumbnail icon. In this state, the effect button (B) is double-clicked on to thereby transit to the effect mode of adding an effect to the thumbnail.

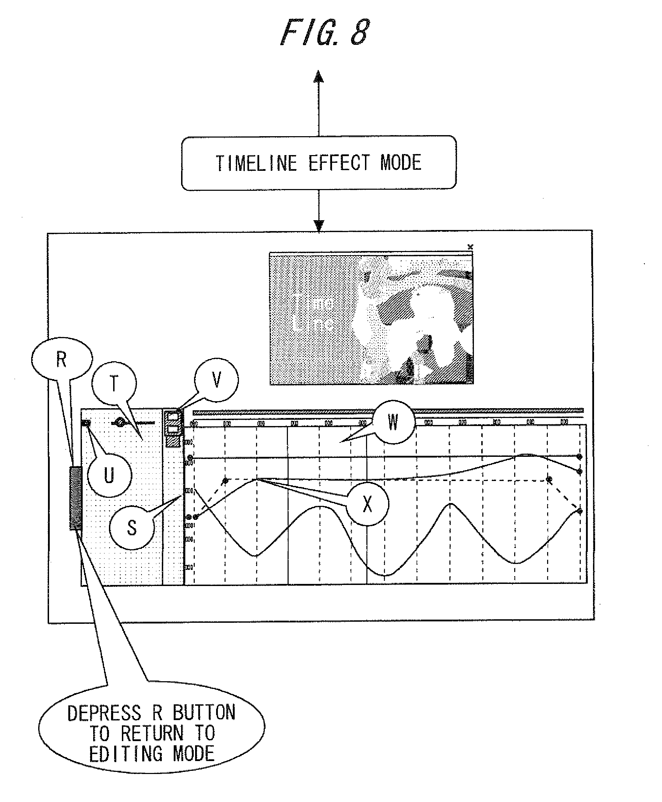

Effect windows (windows (S) and (U) of FIG. 8) are displayed, and at this time, a timeline itself becomes translucent while an animation curve table appears on a top surface.

Here, by depression a button (R), the effect window is switched to a display/non-display state.

In the effect window (S), effect control properties are displayed in a window (T).

By depressing the check box in the window (T), an animation effect button (V) is displayed within the effect window. When the button (V) is depressed, the animation curve is displayed within an effect window (W).

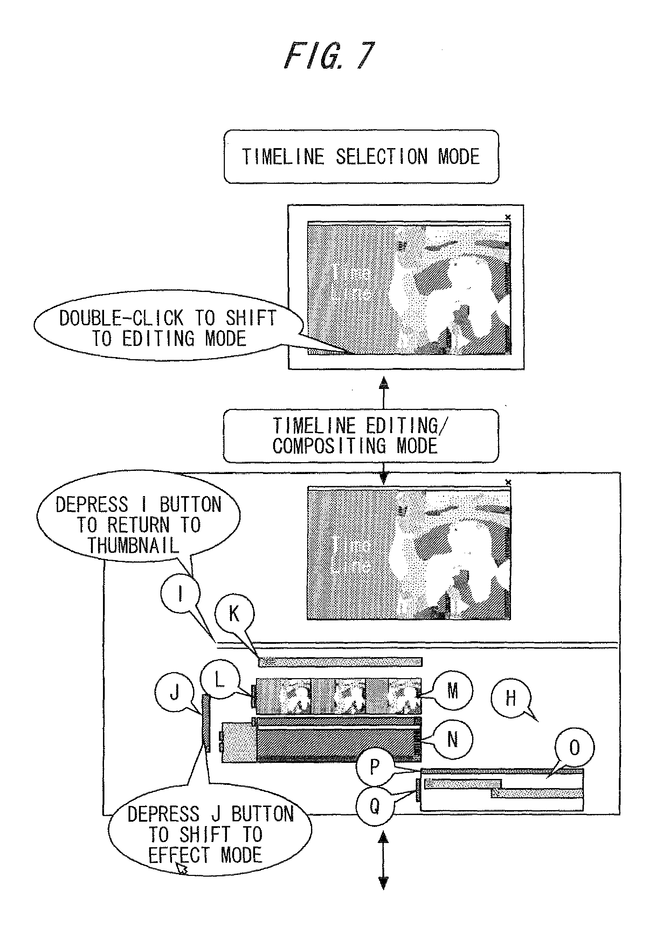

When a timeline creation button permanently provided to the thumbnail icon is clicked on, a new timeline thumbnail appears. By being subjected to a drag-and-drop operation or the above-mentioned drag-and-slash operation, the timeline thumbnail is attracted to a timeline ruler illustrated in FIG. 7. Also in the timeline thumbnail, it is possible to similarly add a dynamic image data item by overlapping further another dynamic image data item by the drag-and-drop operation. Then, also in the timeline thumbnail, the dynamic image data is played back by a mouseover.

Here, by single-clicking on the timeline thumbnail, a shift is made to the editing mode. In the editing mode, a timeline window (H) is opened (see FIG. 7). At this time, a button (I) is operated to thereby end a timeline editing mode, and the timeline thumbnail is recovered. Further, also in the timeline thumbnail, by a mouseover operation, the cut editing controller described with reference to FIG. 5 is displayed to allow the cut editing.

By subjecting further another thumbnail icon or timeline thumbnail to the drag-and-drop operation toward the above-mentioned timeline window (H), a timeline bar is displayed. At this time, when a button (K) of FIG. 7 is depressed, a thumbnail window containing serial-number frame-by-frame display (M) or only start/end frames is displayed. At this time, by depressing a button (L), the effect mode is switched to display/non-display, and the serial-number frame-by-frame display (M) becomes translucent display (N) .

Further, on the timeline bar displayed in the timeline window, an IN/OUT point of the dynamic image can be changed by dragging a left end or a right end of the bar.

The timeline bars can also be grouped. That is, in a state in which a plurality of thumbnail icons are selected, by specifying a menu grouping button displayed by a right-click, the thumbnail icons can be grouped (grouping display window (O)). By depressing a button (P) displayed in the grouping display, reduced display is performed, while by depressing a button (Q), it is possible to control the display/non-display of the effect mode to be effected on the whole group. Then, by subjecting the grouping display window (O) to the drag-and-drop operation toward a region outside the timeline bar, the grouping display window (O) becomes the timeline window. Note that when a button (J) displayed on the left end of the timeline window is depressed, it is possible to shift to the above-mentioned effect mode.

### <Second embodiment>

In this second embodiment, for the video editing program according to the present invention, a characteristic user interface obtained by further improving the first embodiment is described with reference to the drawings.

### (Timeline window and timeline bar)

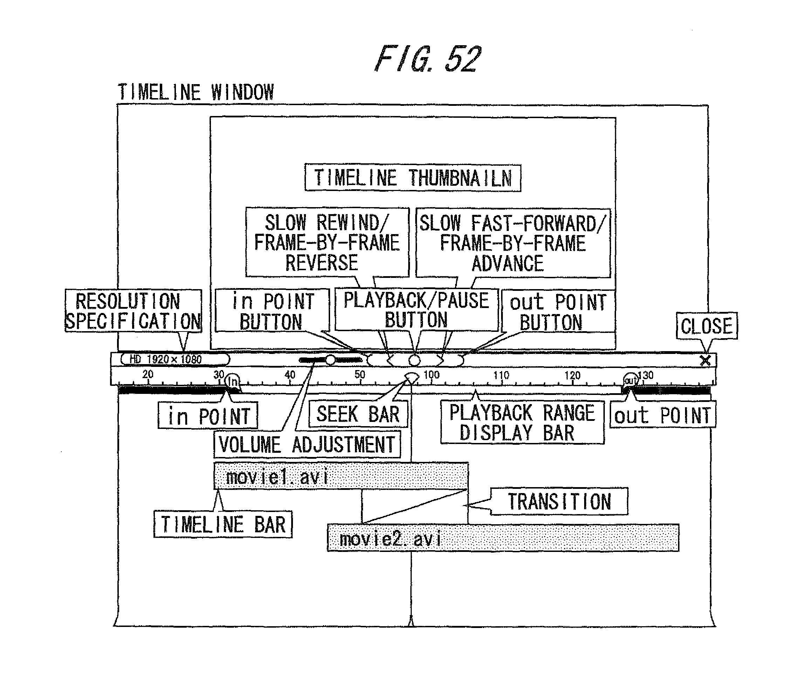

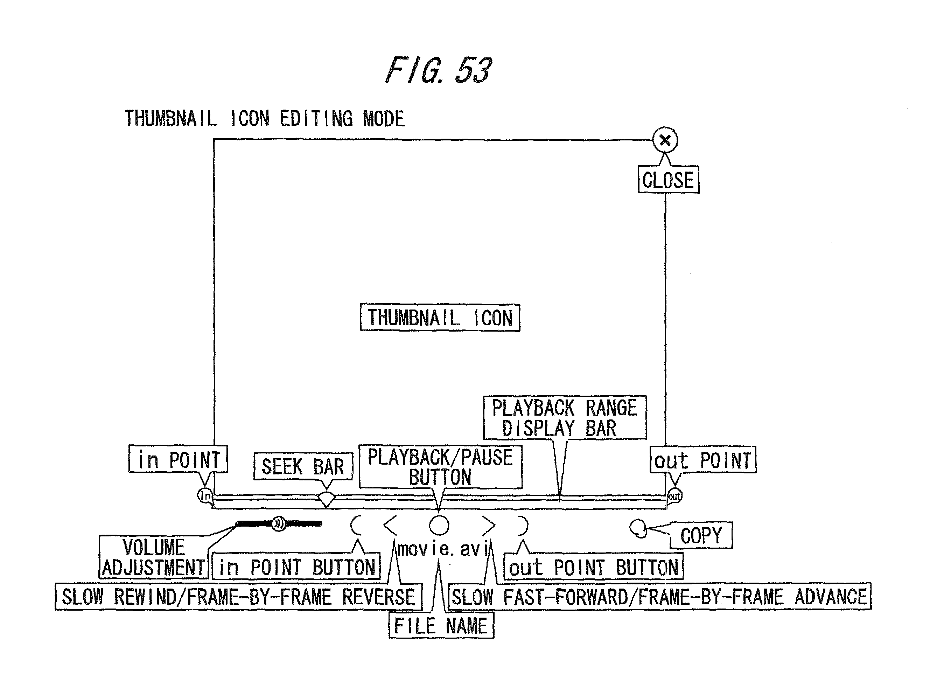

In this embodiment, the user interface illustrated in FIG. 52 is provided. This interface includes a timeline bar provided with a time scale in the middle, a timeline thumbnail window (details of which are displayed in FIG. 53) located in an upper portion thereof , and a timeline window (editing region) in a lower portion thereof. Further arranged on the timeline bar are operation buttons and the like for controlling the playback of the dynamic image, which include a resolution specifying menu box, a volume adjusting bar, an in point button, a slow rewind/frame-by-frame reverse button, a playback/pause button, a slow fast-forward/frame-by-frame advance button, and an out point button.

Further, a playback range display bar surrounded by the in point and the out point is displayed in the timeline window provided with the time scale in itself. In addition, a seek bar indicating a playback time point is provided in a vertical direction.

Further, in the timeline window, the timeline bar indicating a length of a playback time of a dynamic image file can be arranged along with a file name, and the timeline bar can be stretched/reduced freely by a mouse operation. In addition, a plurality of dynamic image files can be arranged in the timeline window in a superimposed manner, and a transition icon for which a video effect is defined can be arranged between the dynamic image file and the dynamic image file. Description of the transition icon is made later.

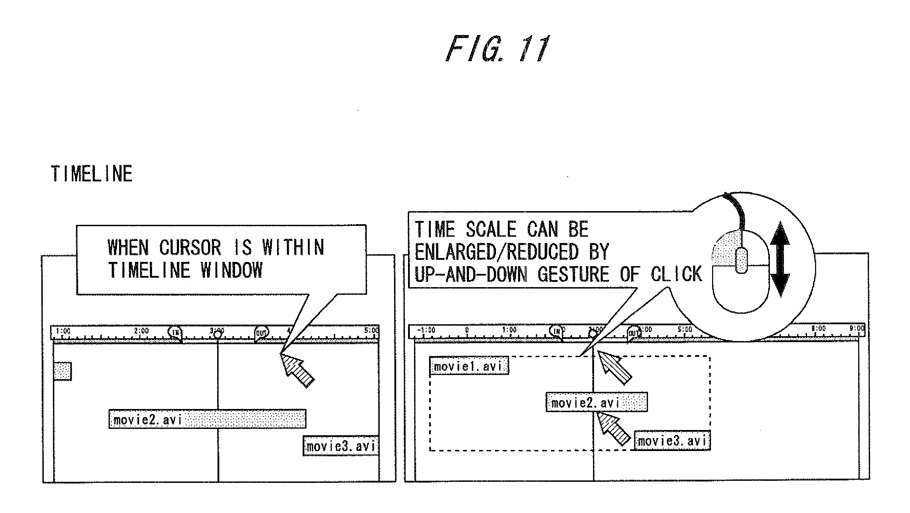

Further, as illustrated in FIG. 11, in a case where the mouse cursor is placed within the timeline window, the time scale can be enlarged/reduced by an up-and-down motion of the mouse or a forward rotation or a backward rotation of the wheel. For example, as illustrated in FIG. 11, in a case where three timeline bars are arranged within the timeline window, a leading position of a start (left) timeline bar and a trailing position of a last (right) timeline bar lie off the timeline window, but by moving the mouse upward (or downward) while holding a click on the mouse, the timeline window is reduced (the time scale is also reduced) to accommodate the whole three timeline bars within the timeline window.

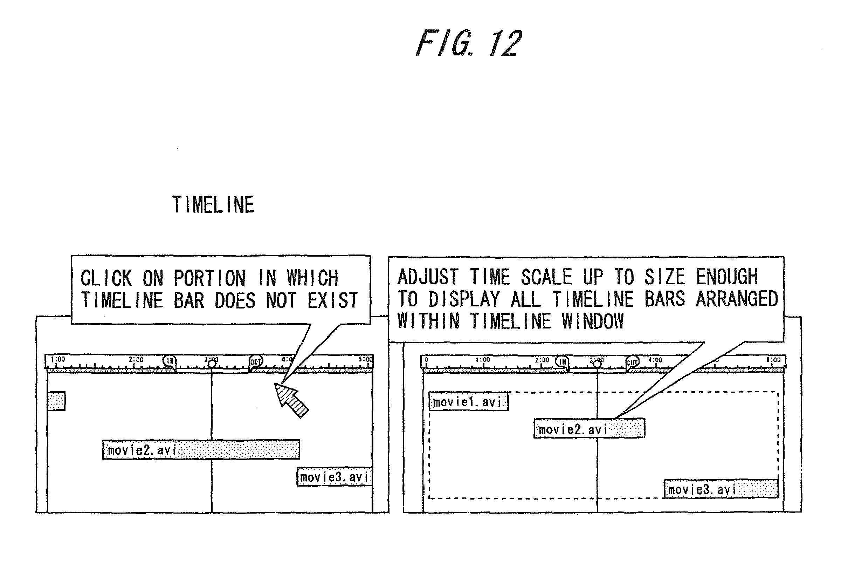

Further, as illustrated in FIG. 12, by placing the mouse cursor in a portion in which the timeline bar does not exist within the timeline window and clicking thereon, the time scale is adjusted (enlarged/reduced) up to a size enough to display, within the timeline window, all the timeline bars arranged within the timeline window.

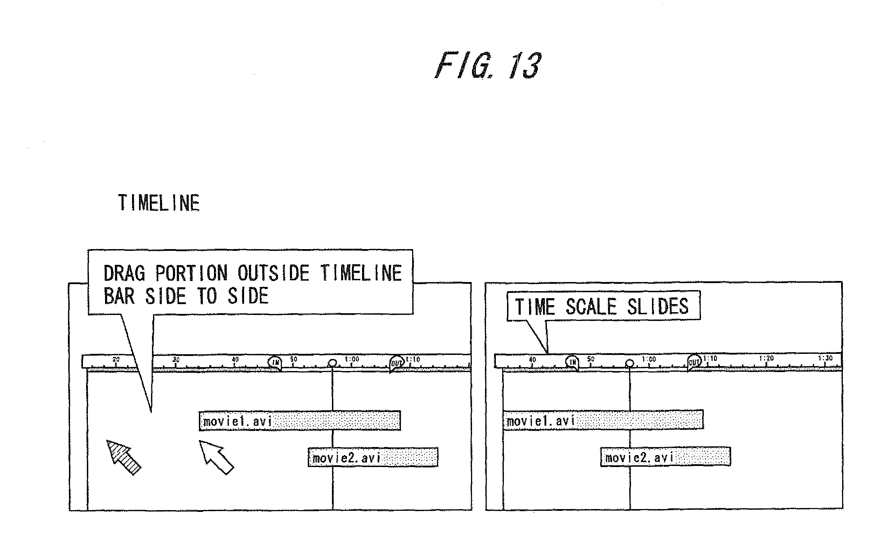

In addition, as illustrated in FIG. 13, by placing the mouse cursor in the portion in which the timeline bar does not exist within the timeline window and performing a left-and-right movement (drag) while holding a click state, the time scale moves sliding from side to side.

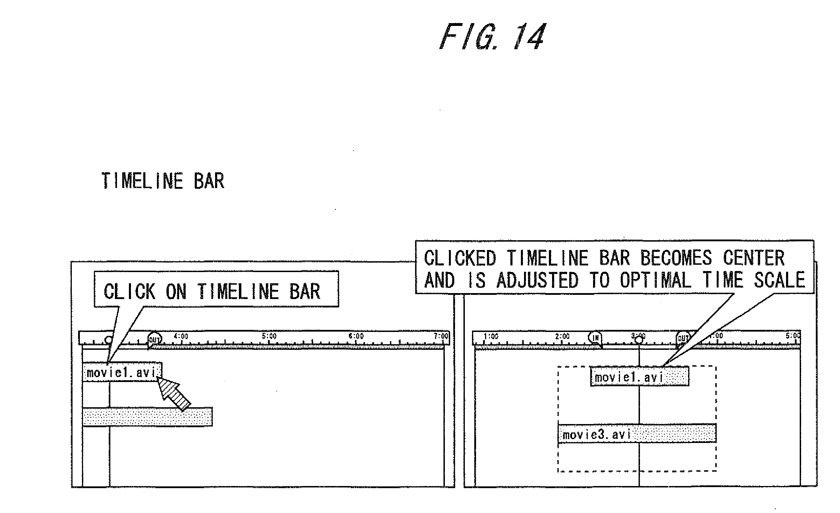

Further, as illustrated in FIG. 14, by placing the mouse cursor on the timeline bar within the timeline window and clicking thereon when the timeline bar is located toward an edge within the window, the timeline bar is located at the center of the timeline window and reduced/enlarged to a time scale enough to accommodate the timeline bar.

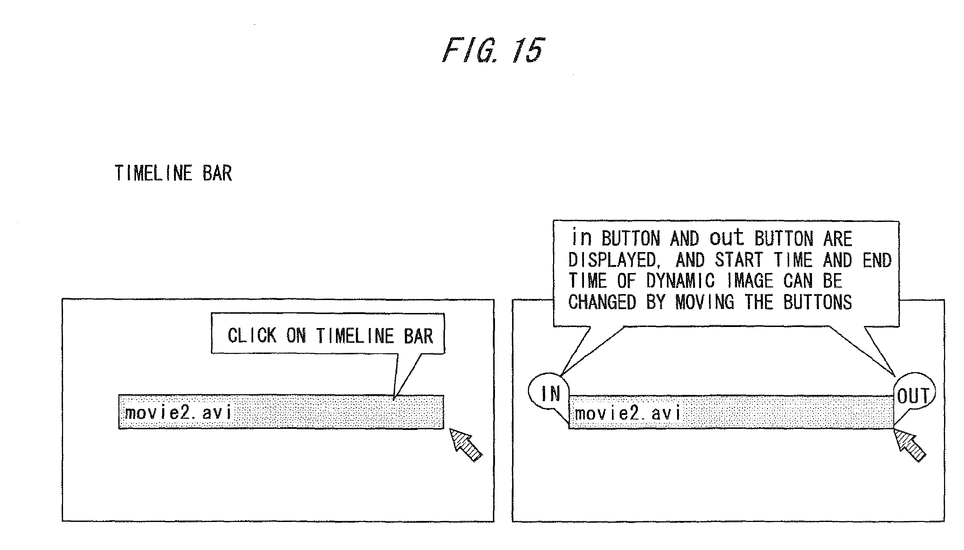

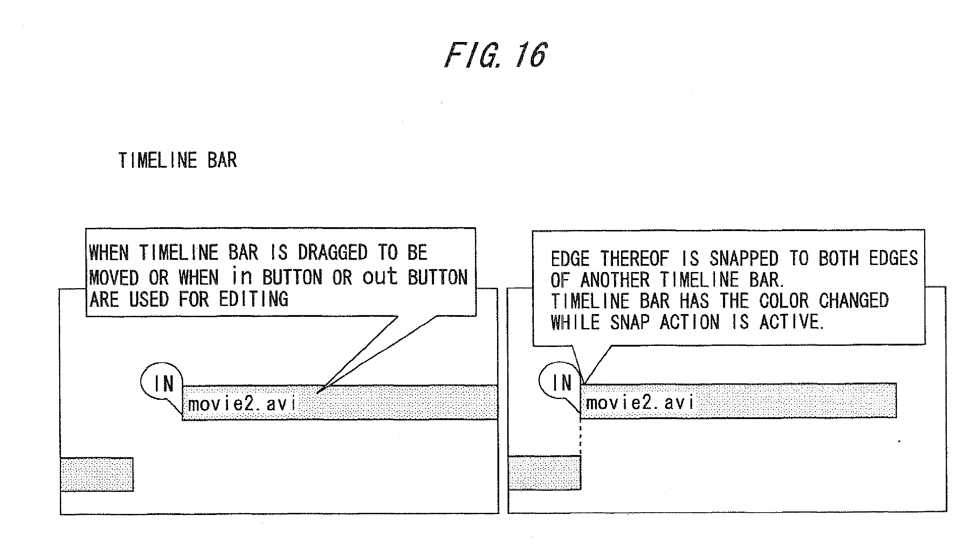

Further, as illustrated in FIG. 15, by clicking on the timeline bar, the in button and the out button are displayed at both ends thereof, and by placing the mouse cursor on the button and performing a drag, it is possible to change a start time and an end time of the dynamic image. Here, as illustrated in FIG. 16, when the in button or the out button is dragged to move the timeline bar, as illustrated in the right diagram of FIG. 16, the in button or the out button is arranged so as to be in alignment with an edge position of another timeline bar to share the same time point. At this time, the timeline bar has the color changed in order to visually present the user with such a snap action being functioning (for example, a normally black time bar being changed to yellow).

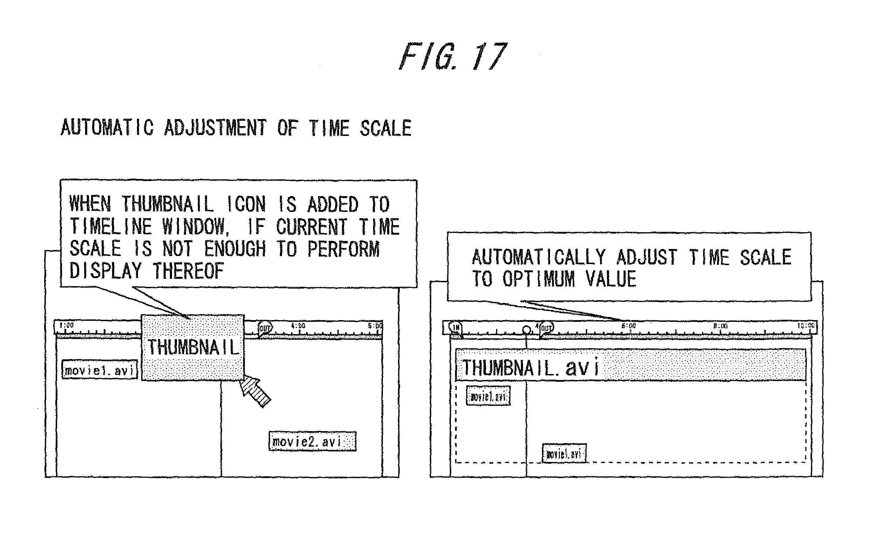

In the timeline window, the thumbnail icon symbolizing the dynamic image can be arranged by the drag-and-drop operation, and at that time, as illustrated in FIG. 17, if the dynamic image has such a length as to extend off the timeline window at that time point, the time scale itself is automatically adjusted (enlarged/reduced), and an optimal operation on the timeline window becomes possible.

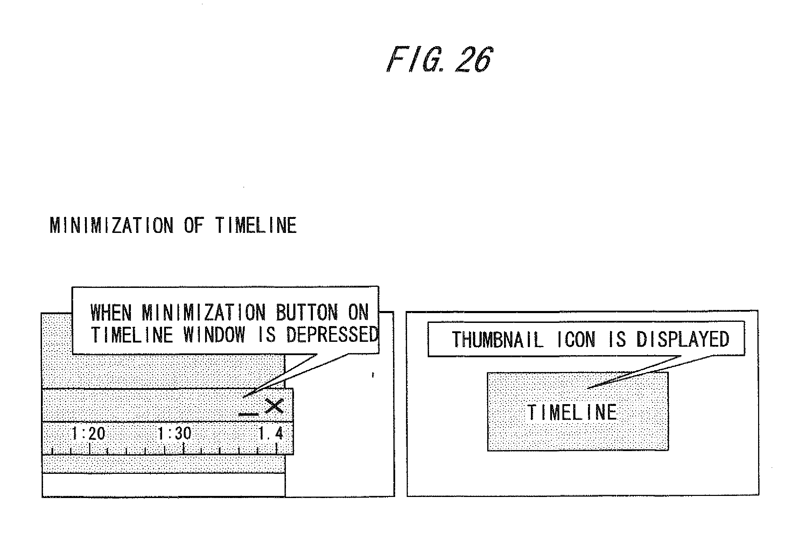

A minimization button is located on the time scale of the timeline window (see FIG. 26), and by placing the mouse cursor on the button and clicking thereon, the timeline window is minimized and displayed on the screen as the thumbnail icon.

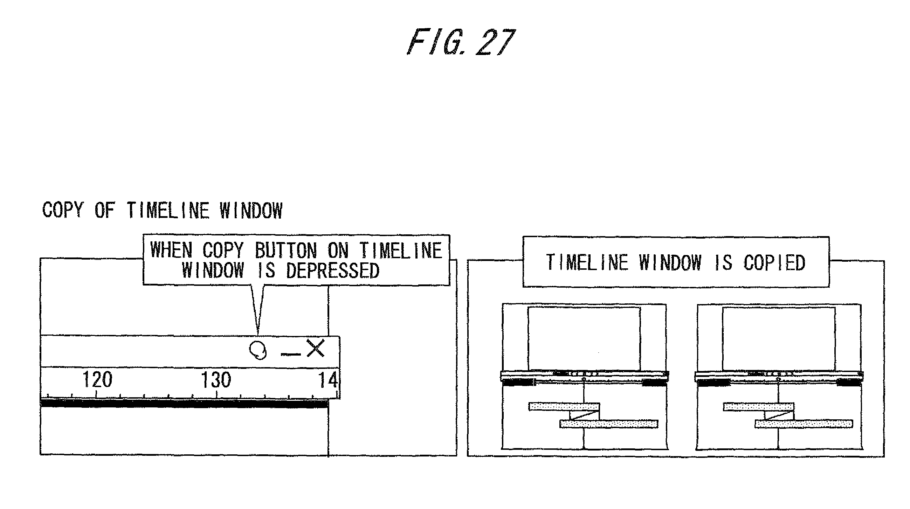

Further, the copy button is located on the time scale of the timeline window (FIG. 27), and as illustrated in the right diagram of FIG. 27, it is possible to copy the timeline window itself.

### (Copy function)

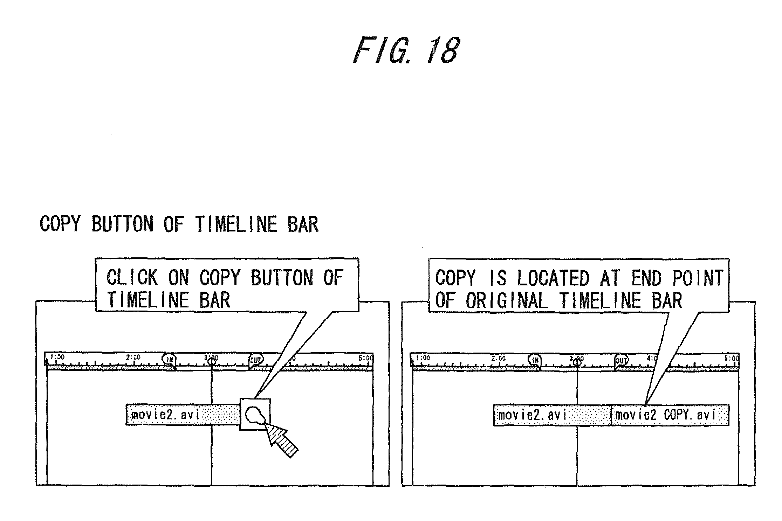

The timeline bar can be copied, and as illustrated in FIG. 18, by clicking on the copy button in a state in which the copy button is displayed along with the in button or the out button, the same timeline bar is arranged within the timeline window.

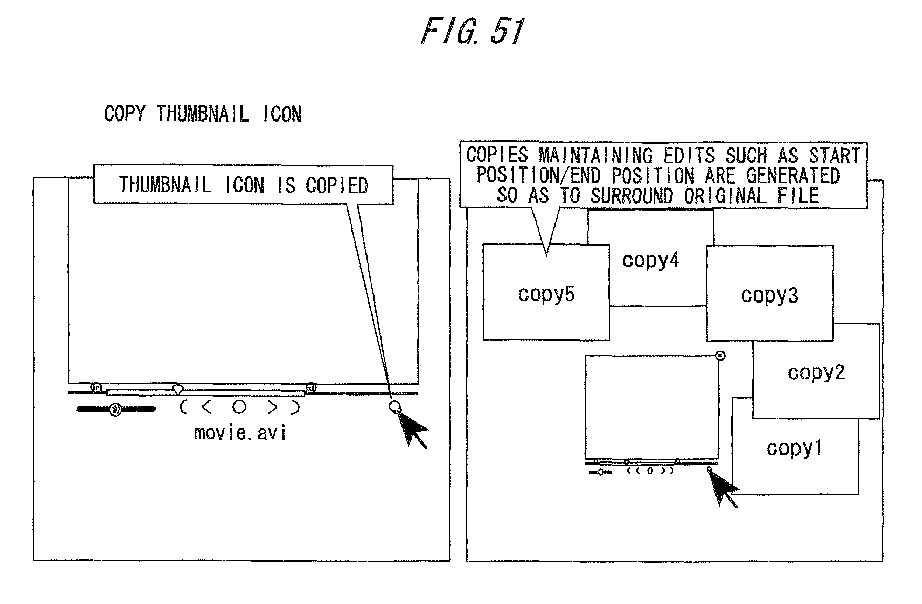

Note that the copy function allows the copying not only of the timeline bar but also of a magnet bar described later and further the copying of the thumbnail itself (see FIG. 51) in the same manner.

### (Link copy function)

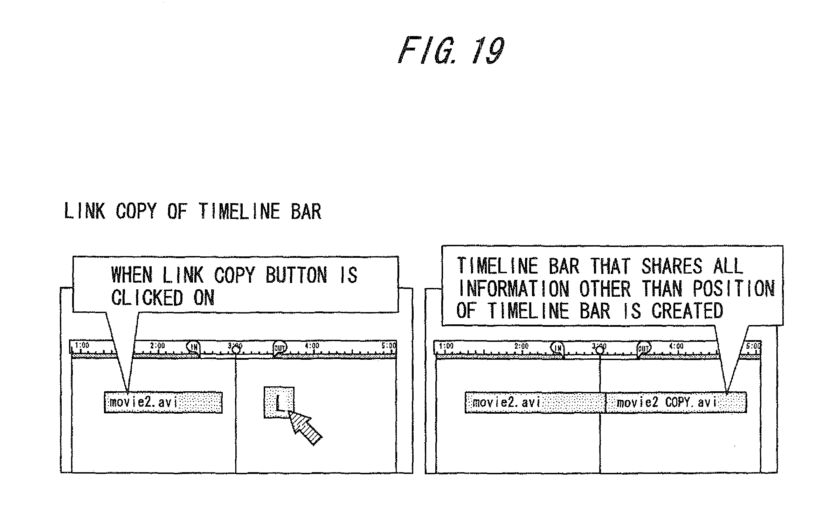

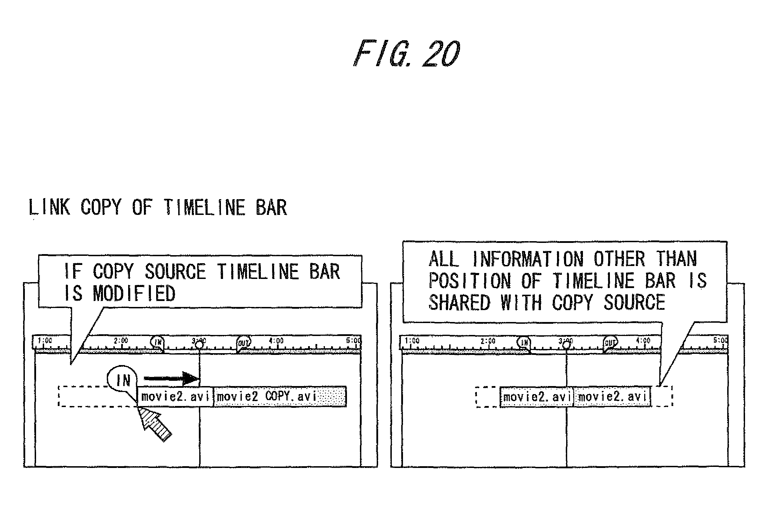

Further, the timeline bar can be subjected to link copy, as illustrated in FIG. 19, by clicking on a link copy button in a state in which the link copy button is displayed along with the in button or the out button, the same timeline bar (link display) is arranged within the timeline window. In FIG. 18, a timeline (dynamic image data) itself is subjected to the copy (replication), while the link copy illustrated in FIG. 19 is for copying only link information on the dynamic image data and can obtain the same playback effect with a smaller amount of data than in the case of replicating the same time line. Note that in a link copy function described above, as illustrated in FIG. 20, if the timeline bar of a copy source is modified, all information other than the start position of the timeline bar is also shared by the copy source. For example, if a playback duration is reduced in the timeline bar of the copy source, the playback duration in the link copy is also reduced.

### (Timeline selection function)

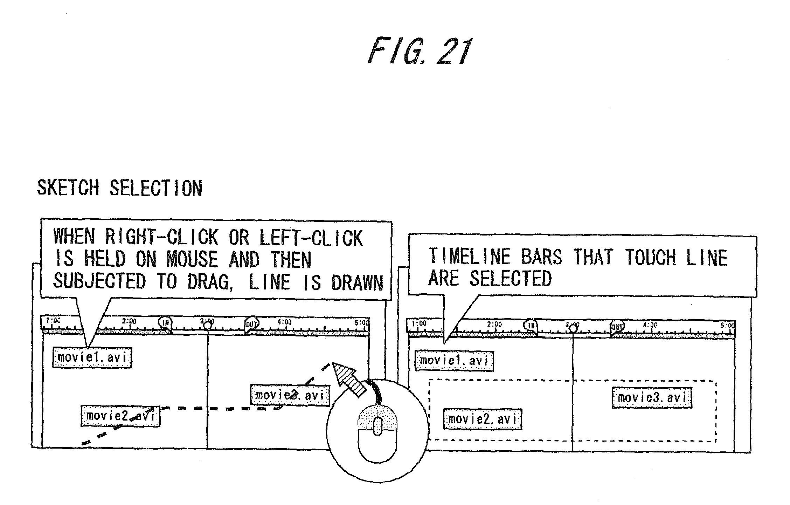

In the timeline window, when a right-click or a left-click is held on the mouse and then a drag operation is performed, the mouse cursor is allowed to perform drawing (sketch) within the timeline window (see FIG. 21).

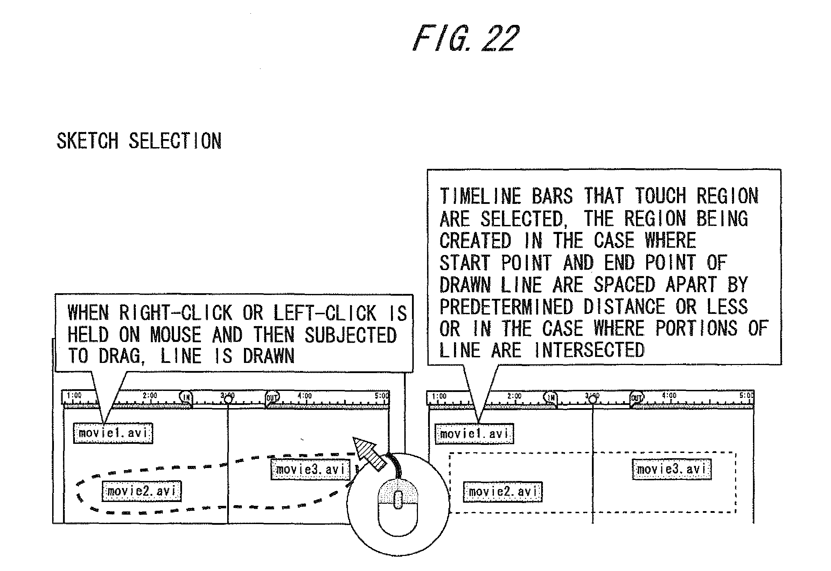

When a sketch function described above is used to perform tracing on a plurality of timeline bar, the timeline bar in contact with the line drawn by the sketch is brought to a selected state (see the right diagram of FIG. 21). Further, the selection of the timeline bar may be performed by an enclosure shape drawn by a line (see FIG. 22).

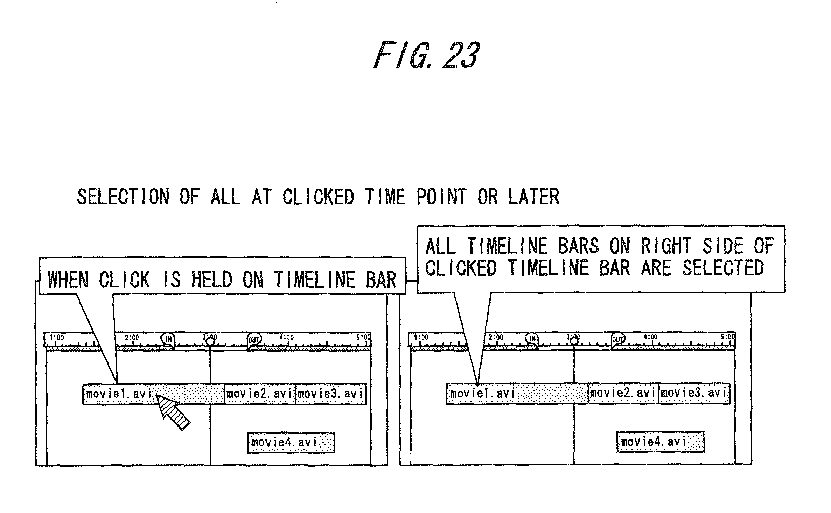

Further, by specifying an arbitrary timeline bar with the mouse cursor and clicking thereon to a held state (operation for holding a depressed state for a predetermined number of seconds), the selection of all the timeline bars arranged in a time point after the clicked timeline bar may be made possible (see FIG. 23).

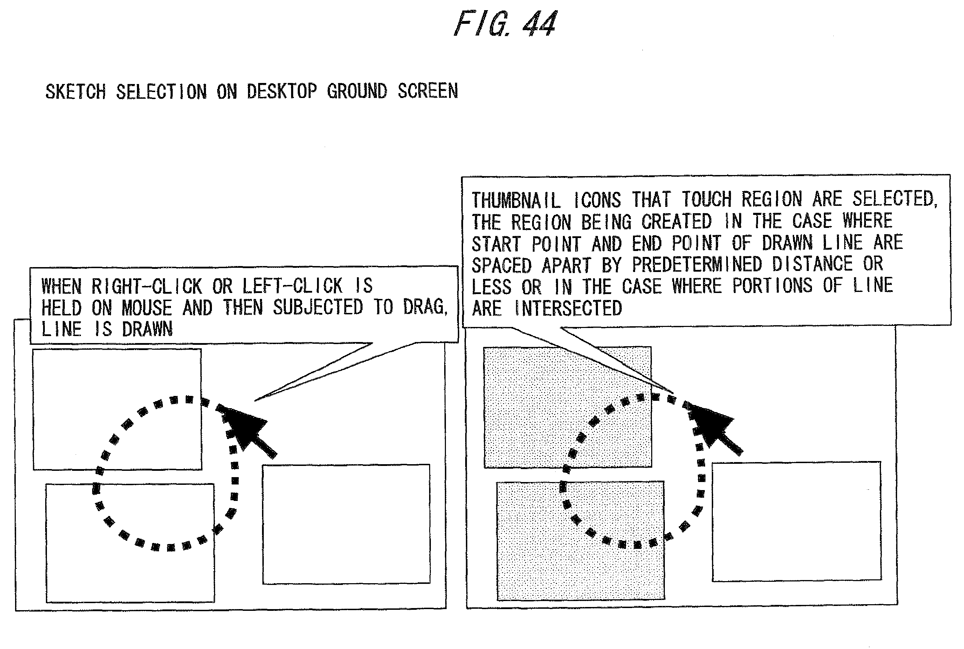

Note that the above-mentioned sketch function is not limited only to the use for the timeline selection, and can also be used for the selection of objects arranged on a desktop screen as illustrated in PIG. 43 and FIG. 44.

### (Effect timeline bar)

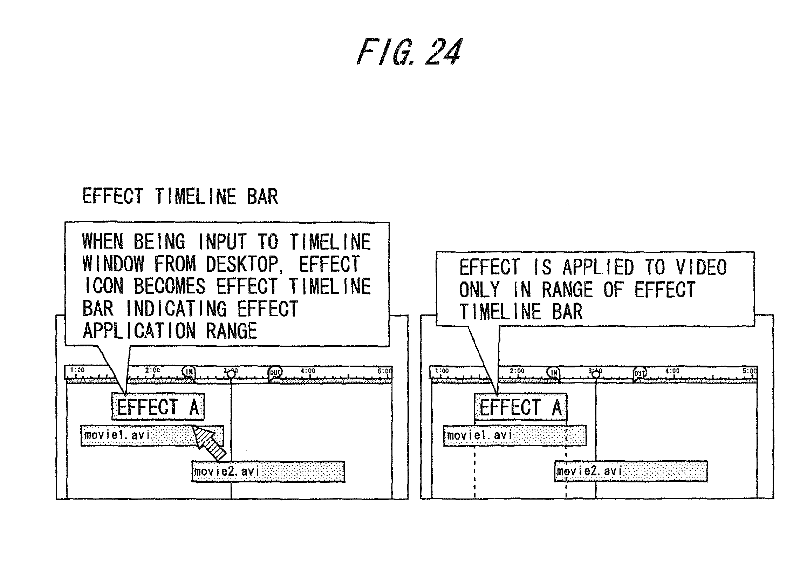

An effect timeline bar (see FIG. 24) is a timeline bar symbolizing an effect for the dynamic image and exists on the desktop outside the region of the timeline window as an icon (effect icon). When being subjected to the drag-and-drop operation by the mouse to be arranged in the timeline window, such an effect icon is displayed as the effect timeline bar indicating an effect-applied range. The effect timeline bar has a predetermined effect (image effect) applied to a dynamic image (video) in the middle of playback when the seek bar falls in this range.

FIG. 17 illustrates an example in which a transition effect timeline bar that means a transition effect as the effect is arranged, and the transition effect timeline bar is automatically arranged in a time region in which the timeline bars are overlapped with each other. The effect timeline bar produces the effect when the playback shifts from a first timeline bar to a second timeline bar.

### (Playback range display bar)

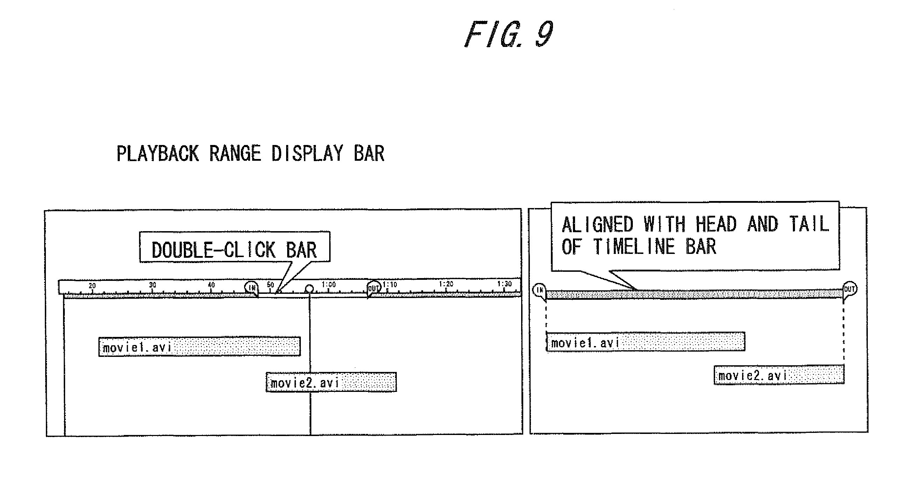

By placing the mouse cursor on the playback range display bar and performing a double-click thereon, the playback start point of the playback range display bar is adjusted so as to be in alignment with the playback start position of the timeline bar located in the temporally leading position, and the playback end point of the playback range display bar is adjusted so as to be in alignment with the end position of the timeline bar located in the temporally trailing position (see the right diagram of FIG. 9).

Accordingly, the playback range display bar is stretched/reduced so as to fit the timeline bars existing within the range.

By dragging the in button or the out button of the playback range display bar to stretch/reduce the playback range display bar, it is possible to specify the playback range of the dynamic image. Then, by mouseovering the in/out button, it is possible to display a length of the playback range as a numerical value.

By dragging (holding a clicked state of) the playback range display bar itself, it is possible to move the playback range display bar without changing its length.

### (Seek bar)

The seek bar indicates a (current) playback position at the time point as illustrated in FIG. 52. When the mouse cursor is caused to be overlaid (mouseovered) on the seek bar, an elapsed time at the time point is displayed as a numerical value.

### (Magnet function)

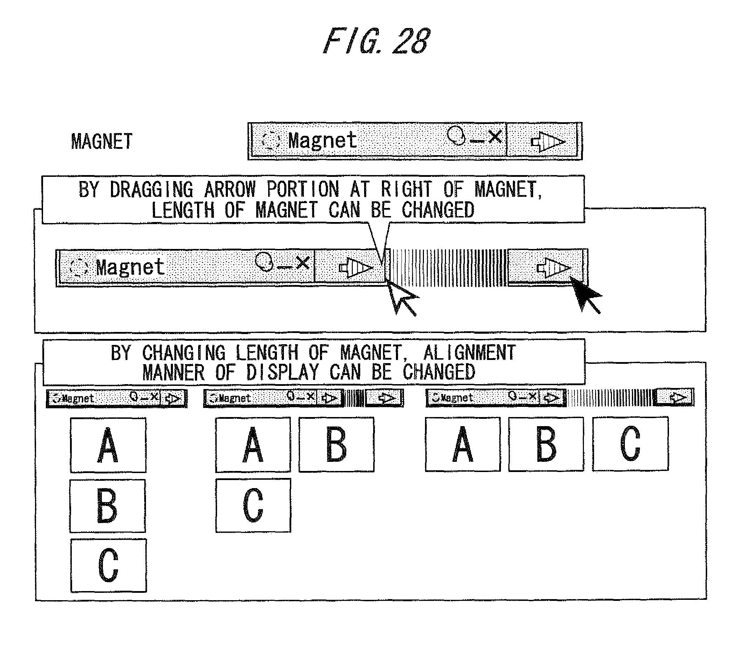

As illustrated in FIG. 28, a magnet bar is a graphic symbol that collectively manages a plurality of dynamic image thumbnails, and as its name suggests, manages the thumbnails (dynamic image thumbnails) in a state of being attracted under control thereof.

By performing the drag operation on an arrow button displayed at the right end of the magnet bar, it is possible to change the length of the magnet bar. This allows a predetermined number of dynamic image thumbnails aligned in the vertical direction to be rearranged in the lateral direction.

Further, character information that means a scene, a dynamic image type, and the like can be displayed on each magnet, and the character information can be changed. Further, it is possible to change the color of each magnet bar. In that case, by clicking on an "O" button displayed at the left end of the magnet bar, it is possible to change the color of the corresponding magnet bar.

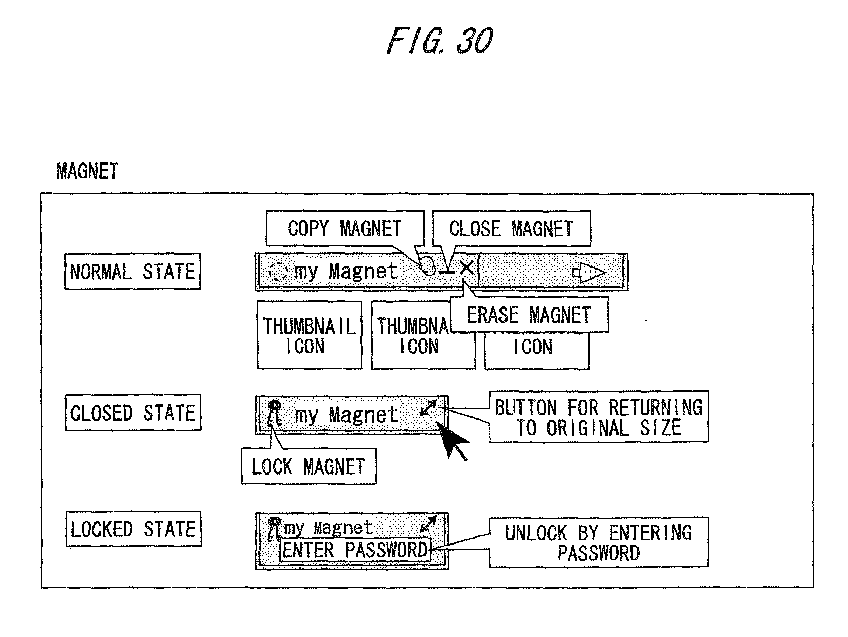

The copy button is displayed on the magnet bar (FIG. 30), and by performing the click operation on the copy button, it is possible to copy the magnet bar. Further, a deletion button is located thereon, making it possible to delete the magnet itself.

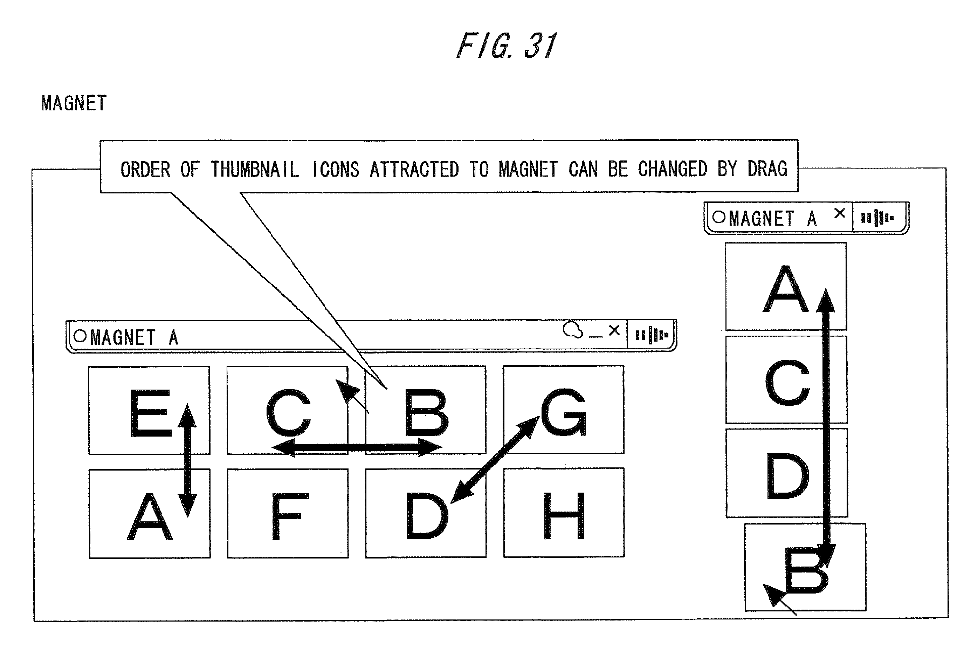

In addition, a graphic symbolizing a key is displayed on the magnet bar (FIG. 30), and the dynamic image thumbnails included in the magnet bar may be allowed to be browsed only when the graphic is clicked on and a password is entered. Further, the dynamic image thumbnails (thumbnail icons) arranged under control of the magnet bar can have their arrangement positions reshuffled by the drag operation on the mouse (FIG. 31).

Note that the magnet bar can also be made in non-display (closed) on the screen, and by dragging the arrow button of FIG. 30 in a leftward direction, the thumbnails under control thereof are displayed aligned in the vertical direction and then seemingly folded to a non-display state.

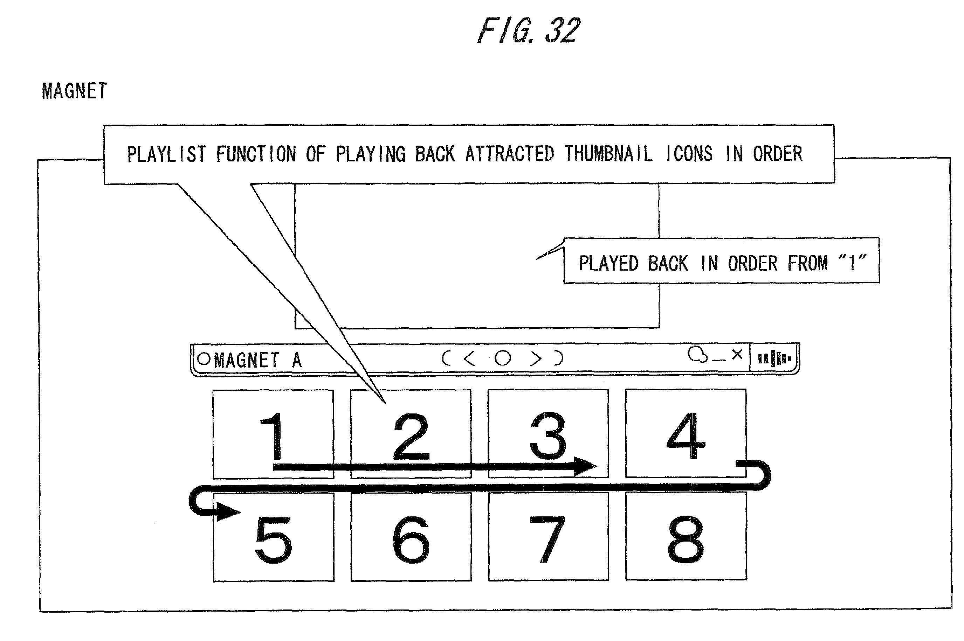

Further, a playback window is displayed on the magnet bar, and the dynamic image thumbnails (thumbnail icons) arranged under the magnet bar are sequentially played back (FIG. 32).

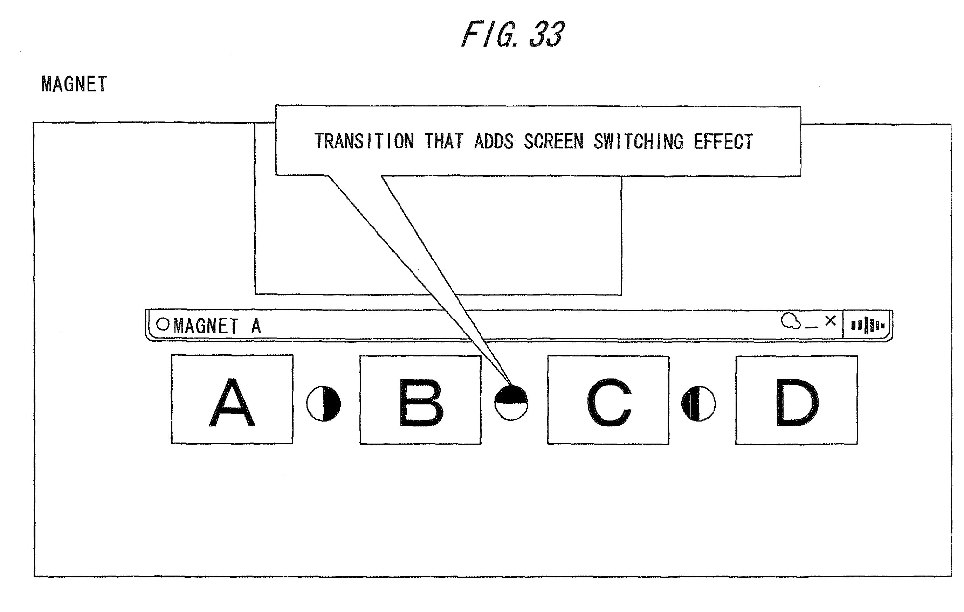

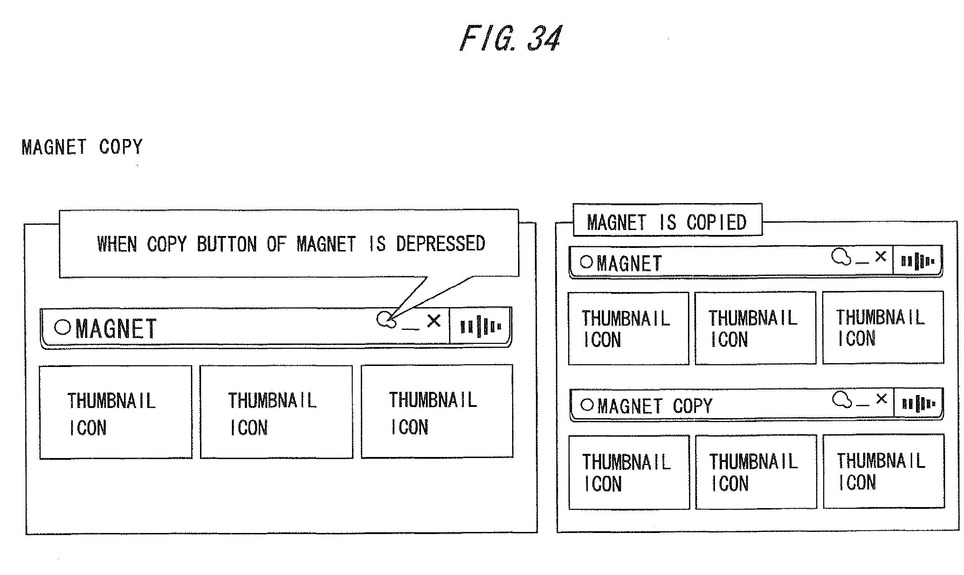

The transition icon can be arranged between the individual thumbnail icons under the magnet bar (FIG. 33), and the effect can be displayed between the played-back dynamic images. Further, it is possible to copy the magnet bar itself (FIG. 34).

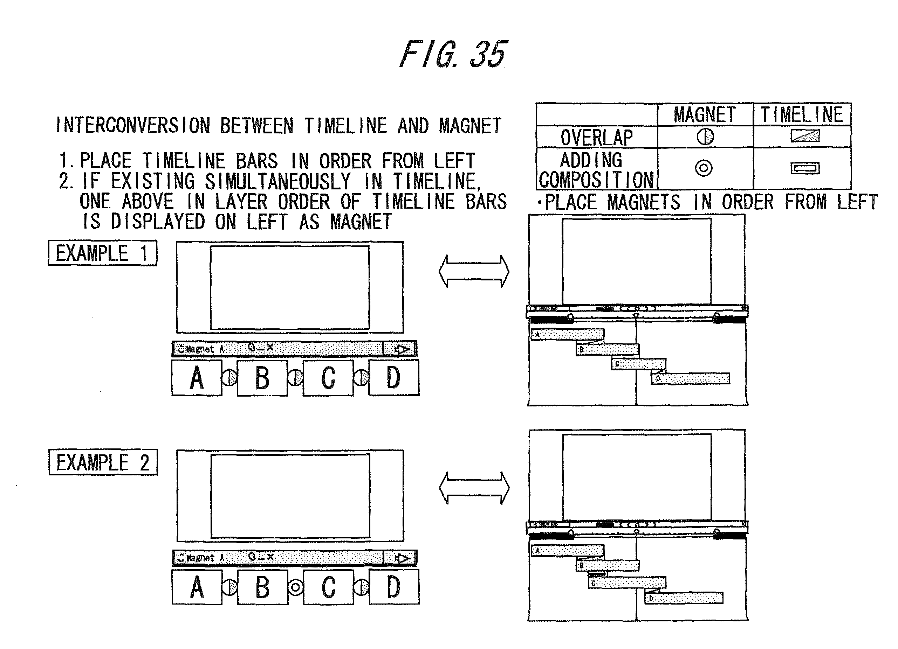

Here, FIG. 35 illustrates a relationship between the above-mentioned timeline window and the magnet bar. As is clear from FIG. 35, the timeline window and the magnet bar are the same in that the dynamic image can be played back, but are different in that the timeline window manages the dynamic image as the timeline bar while the magnet bar manages the dynamic image as the thumbnail as it is.

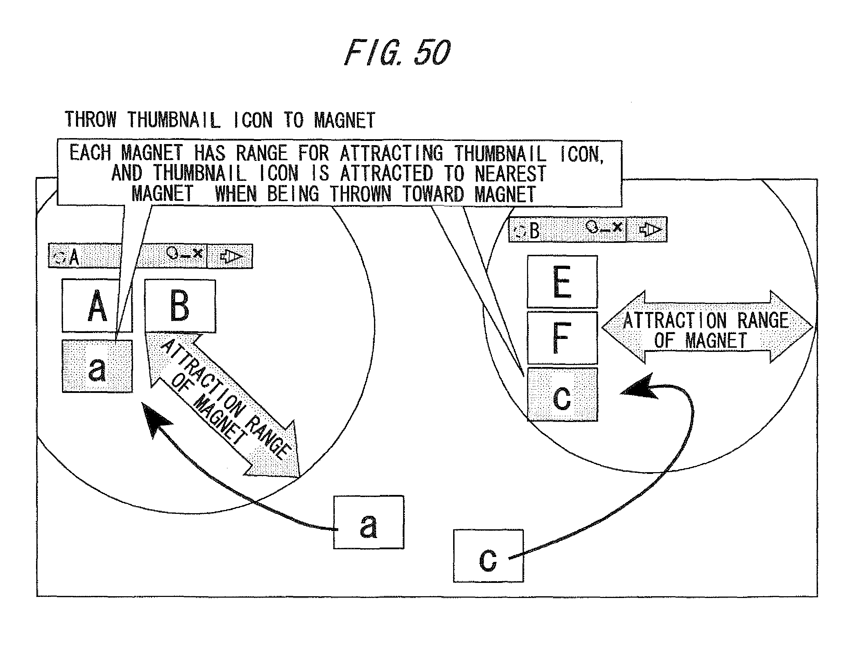

Further, the magnet bar is provided with a region that attracts the thumbnail icon, and as illustrated in FIG. 50, by specifying the thumbnail icon on the screen with the mouse, moving the thumbnail icon toward a predetermined direction with momentum while holding a dragged state, and releasing the thumbnail icon, the thumbnail is attracted to the magnet bar as if the thumbnail were sliding across the desktop screen.

As described above, the magnet bar and the timeline bar have different functions but have some functions in common (for example, thumbnail playback function), which makes it possible to move the thumbnail between the bars and advance an edit processing according to the characteristic of the bar.

### (Destination magnet)

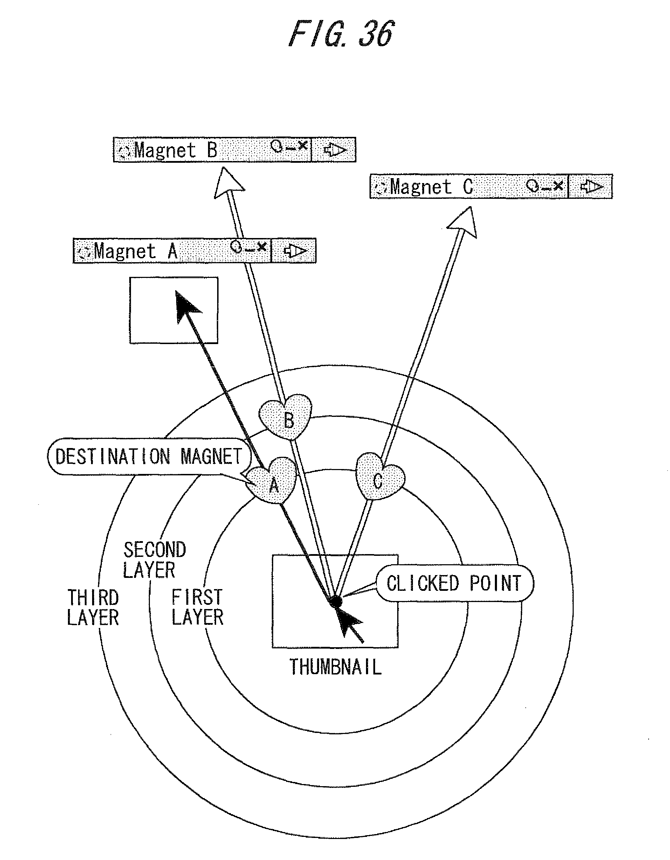

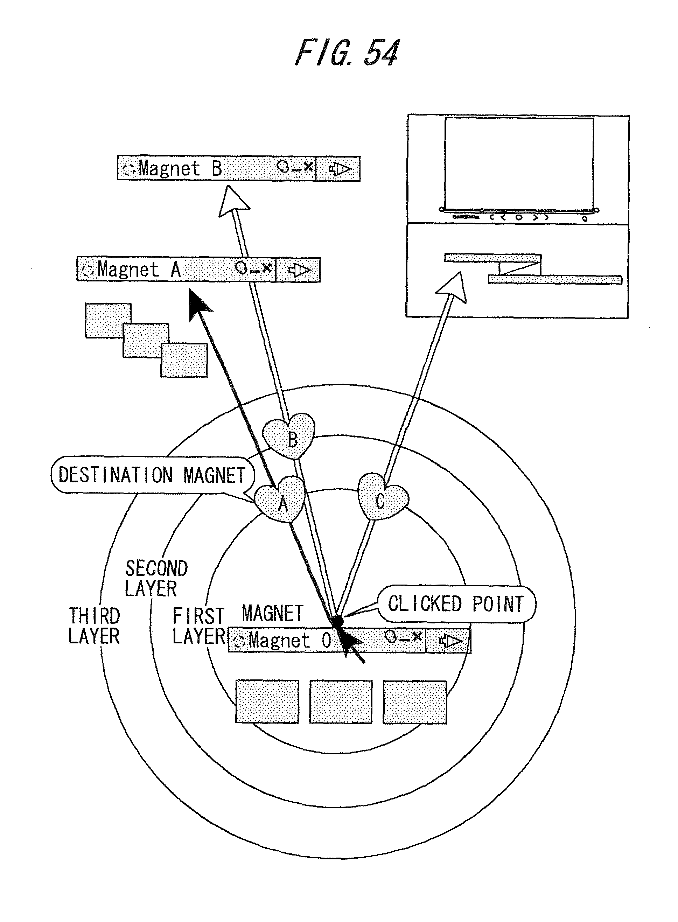

Next, description is made of a "destination magnet" that characterizes the magnet with reference to FIG. 36 and FIG. 54.

Here, the destination magnet is a symbol that specifies an arrangement direction of the magnet bar, and the thumbnail icon is attracted to the magnet bar specified by a destination icon described above. For example, when the thumbnail icon (first object) is fixed and right-clicked on with the mouse cursor, the destination magnets corresponding to all the magnet bars (second objects) scattering on the screen are displayed. If the thumbnail icon is dragged in a dragged state and released on the destination magnet in this state, the thumbnail icon moves as if the thumbnail icon were sliding across the desktop screen, and is attracted to the magnet bar specified by the destination icon.

Accordingly, if apluralityof magnet bars (here, Magnets A to C) are arranged with respect to the thumbnail (dynamic image thumbnail) arranged on the screen, the destination magnets display destinations (magnet bars) to which the thumbnail is to be moved as icons in proximity to the thumbnail, respectively.

In the case of FIG. 36, the destination magnets A to C are arranged with the center of the thumbnail as a reference point. In this embodiment, the destination magnet has a heart shape, meaning that the magnet exists in a opened direction of the heart shape. Here, in proportion to a distance from the center of the thumbnail to the magnet, the destination magnet is also arranged in one of a first layer to a third layer.

With regard to such destination magnets, a processing program first calculates the distances between the thumbnail and the magnet bars arranged on the screen, and sorts the magnet bars in order from the near distance. Then, the destination icons are displayed in the sorted order within a coaxial range of the first layer according to the direction of the magnet. Here, when attempting to display the destination icon, if the arrangement position of the destination icon has an overlap with another destination icon, the destination icon is arranged within a second layer range in the far distance instead of the coaxial first layer. In addition, in a case of having an overlap with another destination icon even in the second layer, the destination icon is arranged within a third layer range in the farther distance.

Note that the destination magnet appears by the right-clicking on not only the thumbnail but also the magnet bar (referred to as "first magnet bar" for the sake of convenience) itself displayed on the screen, the first magnet bar can be attracted to another magnet bar ("second magnet bar") specified by the destination magnet. In that case, all the attracted thumbnail icons are also attracted to the second magnet bar specified by the destination icon.

Note that the destination magnet is a kind of indicator icon, the destination magnet itself has only a function of merely indicating the direction, and target objects (displayed objects) that indicate the destinations may be all the magnet bars arranged on the screen and may further be not only the magnet bar but also all the timeline bars or the like on the screen.

### (Folder monitoring magnet bar)

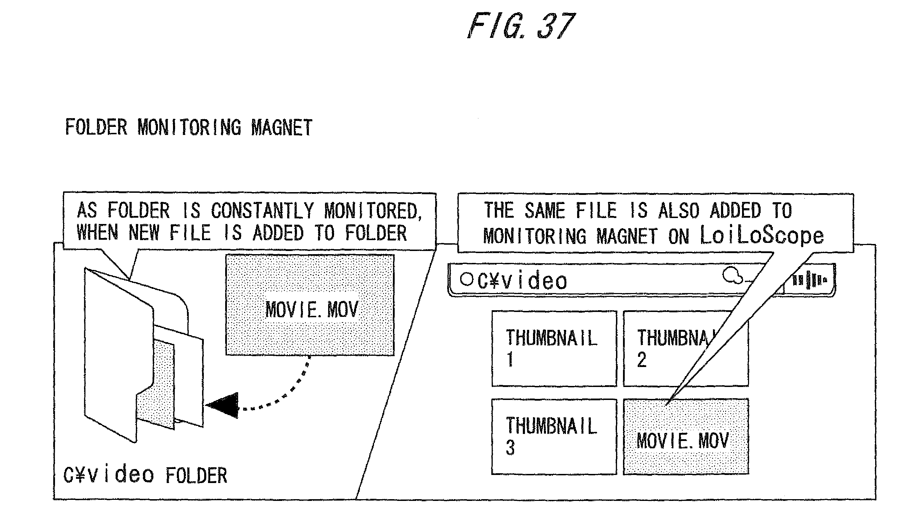

A folder monitoring magnet has a function of having a new file added to a magnet bar for monitoring a folder simultaneously when the new file is added to the folder as illustrated in FIG. 37.

### (Local search magnet bar)

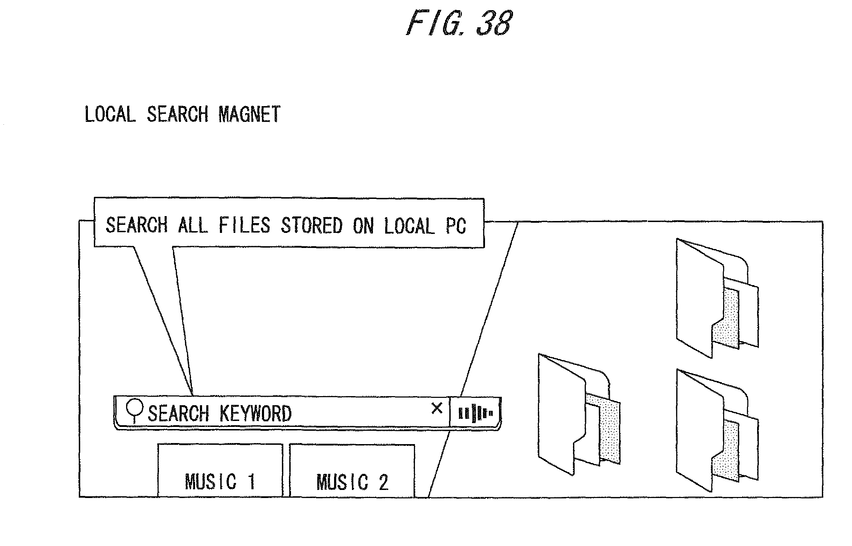

A local search magnet bar is a magnet bar that can search all the files stored on a local personal computer (FIG. 38), and by entering a search keyword in an input window provided to the magnet bar, for example, the thumbnails related to the search keyword are collected and arranged under the magnet bar.

### (Shared magnet bar)

A shared magnet has the same function as a shared folder of files, and when a new thumbnail (here, "movie.mov") is added under a shared magnet bar on a predetermined personal computer located locally, the same file is also added under the magnet bar on another personal computer set to be shared therewith.

### (Web viewer magnet bar)

A Web viewer magnet bar is a magnet bar that manages Web content files (dynamic image files, picture files, and RSS data files) and the like collected from web servers.

### (Filter magnet bar)

By entering a search condition and clicking on a symbol button (here, heart shape) that means addition, only the thumbnails that match the condition are attracted to and arranged under the filter magnet bar that collects the thumbnails. Further, by holding the filter magnet bar in a dragged state and using the above-mentioned sketch function to draw a line or perform enclosure, it is also possible to collect only the thumbnails in contact with the drawn line or the thumbnails that exist in an enclosure range.

### (Trash can magnet bar)

It is possible to gather unused thumbnails. The thumbnails collected by and attracted to the trash can magnet bar may be completely erased when logging out from the personal computer. Further, the thumbnails may be erased after elapse of a predetermined time.

### (Handwriting effect function)

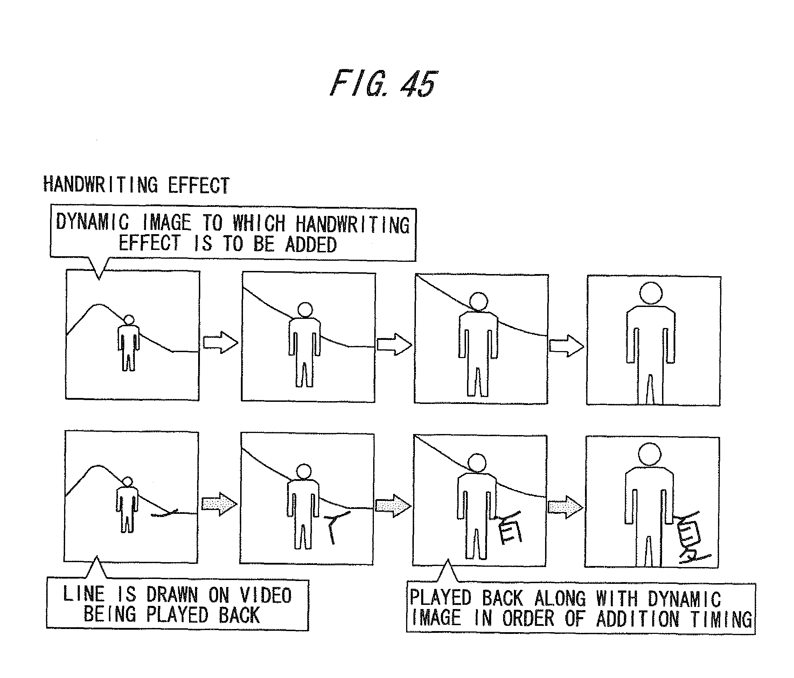

FIG. 45 illustrates a handwriting effect function, and if the mouse cursor is used to perform some handwriting input (the character " 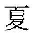 (summer) " in FIG. 45) onto the dynamic image (video) being played back, the character is played back along with the dynamic image in synchronization with the addition timing.

### (Screen display function)

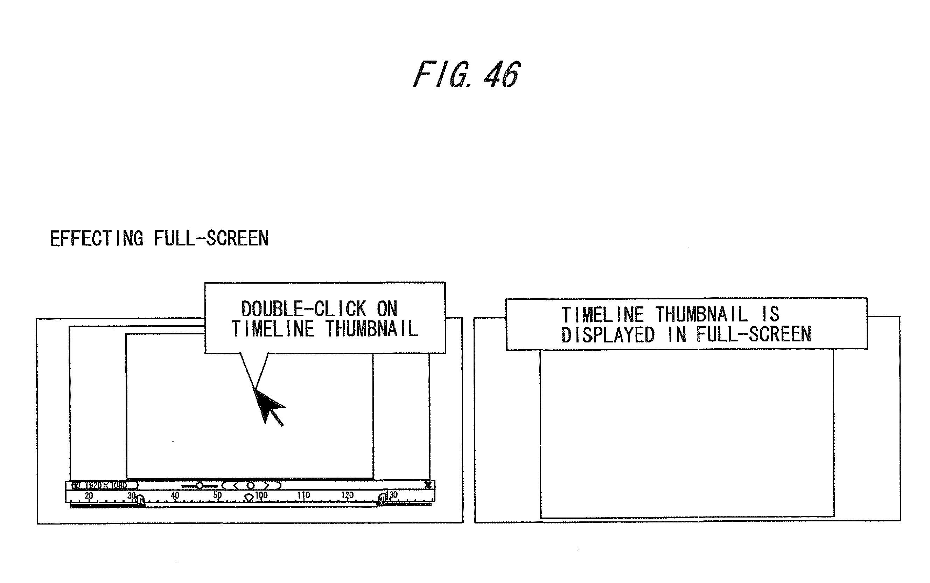

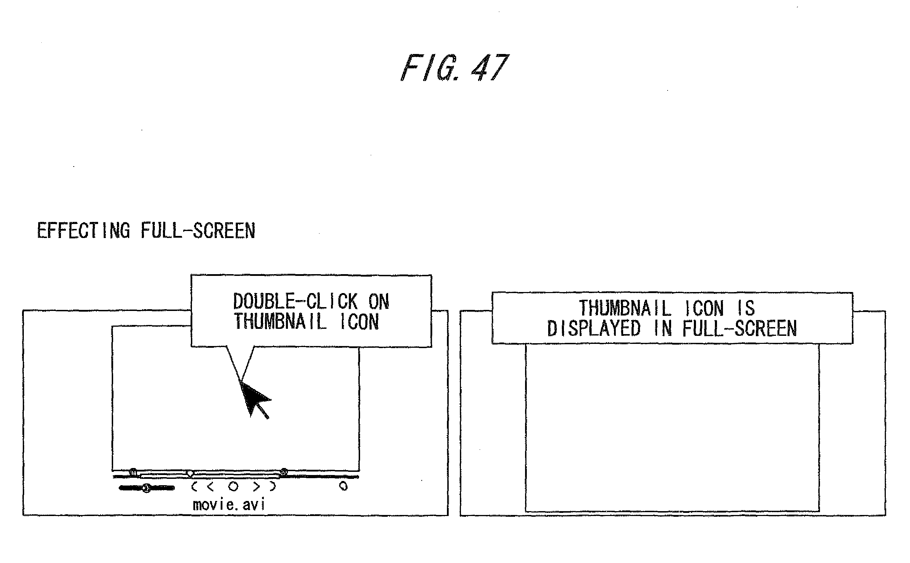

FIG. 46 and FIG. 47 are for describing a method of effecting a full-screen of the dynamic image (video) being played back in the timeline window. That is, by double-clicking on the timeline thumbnail (playback dynamic image (video)) or the thumbnail icon, the playback dynamic image (video) is displayed in full-screen.

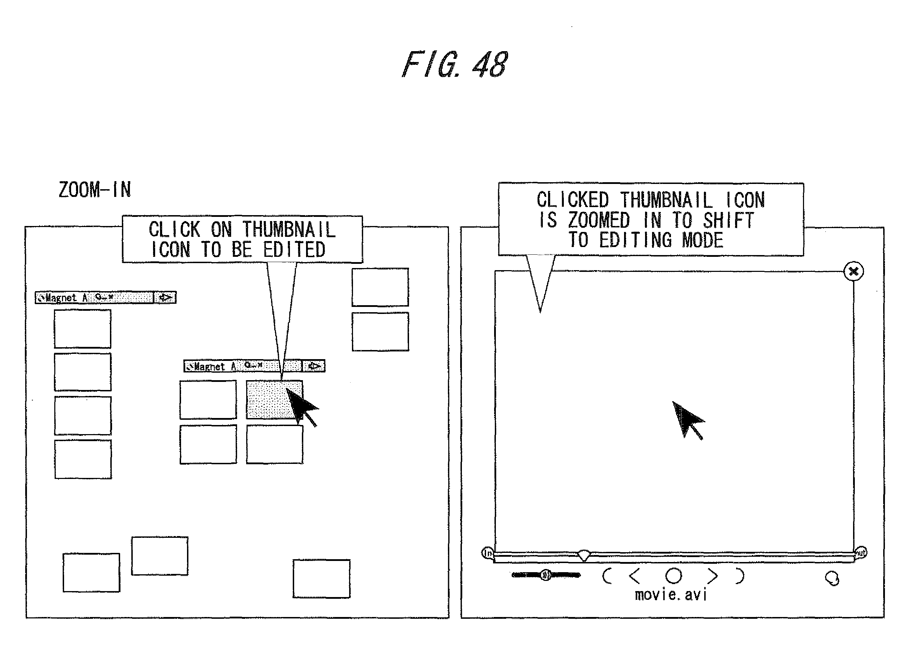

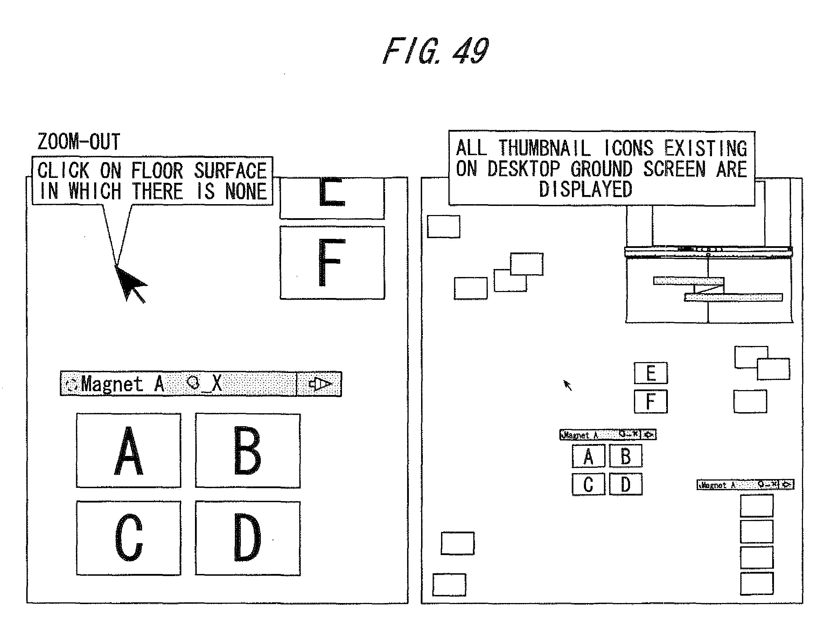

FIG. 48 and FIG. 49 are for describing a zoom-in/zoom-out function.

Note that in the description of this embodiment, various functions are realized by subjecting the mouse cursor displayed on the screen to the movement of the mouse or the operation of a mouse button, but those functions may be realized not only by the mouse but also by the operation using a touch pen or a touch operation by the user's finger tip with the screen set as a touch panel, or further by the operation on a tablet connected to the personal computer.

### Industrial Applicability

The present invention can be applied not only to the video data editing technology but also to an interface that performs selection and organization on the desktop screen. For example, the present invention can be used for a user interface of the screen of a management system for music data and image data, and further of a mind map, an equation editor, a social network service (SNS), and the like.

## Claims

1. An interface system for editing video data by using a computer, which causes the computer to execute the steps of:
arranging a plurality of thumbnail icons on a screen by a central processing unit of the computer, each of the plurality of thumbnail icons at least being formed of a still image generated from one dynamic image file;
detecting whether or not a cursor position of which a movement on the screen is controlled by an operation of an auxiliary input device falls on any one of the plurality of thumbnail icons; and
playing back, when it is detected that the cursor position falls on the any one of the plurality of thumbnail icons, a dynamic image file corresponding to the any one of the plurality of thumbnail icons on the any one of the plurality of thumbnail icons.

2. An interface system for editing video data by using a computer according to claim 1 , further causing the computer to execute the steps of:
detecting that the cursor position falls on the any one of the plurality of thumbnail icons and detecting whether or not a click operation is performed on a button or a switch of the auxiliary input device;
performing, when the click operation with respect to the cursor position on the any one of the plurality of thumbnail icons is detected a plurality of times within a predetermined time period, zoom-in display for enlarging a playback region for the dynamic image file on the any one of the plurality of thumbnail icons on the screen;
detecting that the cursor position falls on a desktop ground screen in which the plurality of thumbnail icons are not arranged and detecting whether or not the click operation is performed on the button or the switch of the auxiliary input device; and
performing, when the click operation with respect to the cursor position on the desktop ground screen is detected a plurality of times within a predetermined time period, zoom-out display for performing display by reducing the plurality of thumbnail icons on the screen.

3. An interface system for editing video data by using a computer, which causes the computer to execute the steps of:
arranging a plurality of thumbnail icons on a screen by a central processing unit of the computer, each of the plurality of thumbnail icons at least being formed of a still image generated from one dynamic image file;
arranging, along with the plurality of thumbnail icons, one or a plurality of magnet icons each of which is to serve as a core of an arbitrary set of thumbnail icons on the screen;
detecting that a cursor position of which a movement on the screen is controlled by an auxiliary input device falls on any one of the plurality of thumbnail icons and then detecting that the any one of the plurality of thumbnail icons has become capable of moving on the screen in synchronization with a movement of the cursor by a click operation performed on a button or a switch of the auxiliary input device;
urging to move the any one of the plurality of thumbnail icons on the screen in a direction of the one or the plurality of magnet icons and detecting that the click operation performed on the button or the switch of the auxiliary input device has been released; and
moving the any one of the plurality of thumbnail icons on the screen so as to be attracted to the one or the plurality of magnet icons by the releasing of the click operation.

4. An editing assistance interface system for editing files by using a computer, which edits the files by moving, on a screen, objects symbolizing the files which are arranged on a screen by using the computer, which causes the computer to execute the steps of:
specifying a first object to serve as a movement subject at least on the screen according to a specification input from an auxiliary input device by a central processing unit of the computer;
recognizing a plurality of second objects to serve as movement destination candidates which exist on the screen; and
arranging symbol images, each of which suggests a direction from a position of the first object on the screen to each of the plurality of second objects, in proximity to the first object.

5. An editing assistance interface system for editing files by using a computer according to claim 4, wherein each of the symbol images comprises a symbol image that suggests the direction and a distance from the position of the first object on the screen to each of the plurality of second objects.
